(19) Europäisches Patentamt
European Patent Office
Office européen des brevets

(11) **EP 4 738 182 A1**

(12) **EUROPEAN PATENT APPLICATION**

(43) Date of publication:
06.05.2026 Bulletin 2026/19

(21) Application number: 25178293.4

(22) Date of filing: 22.05.2025

(51) International Patent Classification (IPC):
*G06F 40/216* (2020.01)   *G06F 40/30* (2020.01)
*G06F 40/35* (2020.01)   *G06F 40/44* (2020.01)
*G06F 40/56* (2020.01)

(52) Cooperative Patent Classification (CPC):
G06F 40/216; G06F 40/30; G06F 40/35;
G06F 40/44; G06F 40/56

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 04.11.2024 US 202463715913 P
01.05.2025 US 202519195992

(71) Applicant: Palantir Technologies Inc.
Aventura, Florida 33180 (US)

(72) Inventor: TURCATO, Mark
Denver, 80202 (US)

(74) Representative: Sayer, Robert David et al
Venner Shipley LLP
200 Aldersgate
London EC1A 4HD (GB)

(54) **SYSTEMS AND METHODS FOR DETERMINING IDEAL EXAMPLES FOR FEW-SHOT PROMPTING OF A LARGE LANGUAGE MODEL**

(57)    An artificial intelligence system (AIS) can improve relevance of LLM responses through selection of appropriate examples to provide in an enhanced user prompt. The system may receive user inputs indicating a task to be performed by the LLM, determine a set of examples based at least on an initial user prompt and to potentially include in an enhanced user prompt, and determine which examples in the set of examples are ideal to include in the enhanced user prompt to increase the usefulness of the LLM response. The AIS can generate an enhanced prompt for the LLM based on the user input and identified ideal examples. The enhanced prompt can include at least a portion of the initial user input and each of the identified ideal examples.

EP 4 738 182 A1

**Description**

CROSS-REFERENCE TO RELATED APPLICATIONS

Any and all applications for which a foreign or domestic priority claim is identified in the Application Data Sheet as filed with the present application are hereby incorporated by reference under 37 CFR 1.57 for all purposes and for all that they contain.

FIELD

Implementations of the present disclosure relate to systems and techniques for improving user interactions with computer-based models. More specifically, implementations of the present disclosure relate to computerized systems and techniques that improve user interactions with large language models ("LLMs") through analysis, updating, supplementing, summarizing, etc. natural language prompts from users, as well as responses from the LLMs. Implementations may relate to so-called few-shot prompting, and may increase computational resource efficiency by, for example, reducing (or minimizing) processing demands and/or memory storage demands on LLMs.

BACKGROUND

Large language models are opaque, imprecise, and inconsistent in their replies, which make them good conversationalists but also difficult to debug when they are expected to perform consistently. Further, complex calls to an LLM can involve multiple back-and-forth responses, where previous responses may be used in downstream prompts, which may further complicate the consistency and predictability of results.

SUMMARY

The systems, methods, and devices described herein each have several aspects, no single one of which is solely responsible for its desirable attributes. Without limiting the scope of this disclosure, several non-limiting features will now be described briefly.

Prompting a Large Language Model (LLM) to generate useful responses may be difficult with existing techniques and systems. Existing LLM systems may only be capable of receiving or outputting data as strings. Thus, prompt engineering with existing LLM systems often requires constructing lengthy natural language input which may be difficult and time-consuming, especially for complex prompts. Moreover, existing LLM systems often return undesirable responses due, in part, to the difficulties of constructing useful prompts. Additionally, existing LLM systems often generate responses in a format that may not be suitable for subsequent use such as in various data functions or operations.

An improved artificial intelligence system (or simply "system") facilitates generating LLM prompts that can increase the usefulness (e.g., accuracy, relevance, effectiveness, etc.) of LLM responses. The system can provide an input form, including various data fields, to a user into which the user may input information relating to a prompt. The input information can include a requested task for the LLM to perform, system tools the LLM may use in performing the task, and/or system data the LLM may query in performing the task. A task can include an operation for the LLM to perform such as data-related operations including data queries, data processing, or data manipulation. One example task can include "scheduling maintenance for the oldest piece of equipment."

The system can augment the user's input with additional information, which can reduce the burden of prompt engineering on the user and increase the effectiveness of the prompt in inducing the LLM to generate a useful response. The additional information can be based on the user's input. The additional information may include various examples that the LLM can use to achieve a proper (e.g., desired) response. The system may determine a set of ideal examples that can increase the effectiveness of the prompt to help guide the LLM to a useful response. The additional information may include examples of how the LLM may use the various system tools and/or data when responding to the user's requested task.

BRIEF DESCRIPTION OF THE DRAWINGS

The following drawings and the associated descriptions are provided to illustrate implementations of the present disclosure and do not limit the scope of the claims. Aspects and many of the attendant advantages of this disclosure will become more readily appreciated as the same become better understood by reference to the following detailed description, when taken in conjunction with the accompanying drawings.

FIG. 1A is a block diagram illustrating an example Artificial Intelligence System (or "AIS") in communication with various devices.
FIG. 1B is a flowchart illustrating an example process for interacting with an LLM.
FIG. 2 is an example schematic input and output flow diagram illustrating how one or more modules of the AIS may interact to generate an enhanced user prompt.
FIG. 3 is a flowchart illustrating an example process for generating an enhanced user prompt.
FIG. 4 is a block diagram of an example computer system consistent with carious implementations of the present disclosure.

DETAILED DESCRIPTION

Although certain preferred implementations, embodiments, and examples are disclosed below, the inventive subject matter extends beyond the specifically disclosed implementations to other alternative implementations and/or uses and to modifications and equivalents thereof. Thus, the scope of the claims appended hereto is not limited by any of the particular implementations described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain implementations; however, the order of description should not be construed to imply that these operations are order dependent. Additionally, the structures, systems, and/or devices described herein may be embodied as integrated components or as separate components. For purposes of comparing various implementations, certain aspects and advantages of these implementations are described. Not necessarily all such aspects or advantages are achieved by any particular implementation. Thus, for example, various implementations may be carried out in a manner that achieves or optimizes one advantage or group of advantages as taught herein without necessarily achieving other aspects or advantages as may also be taught or suggested herein.

Overview

As mentioned above, prompting a Large Language Model (LLM) to generate useful responses may be difficult with existing techniques and systems. Existing LLM systems may only be capable of receiving or outputting data as strings. Thus, prompt engineering with existing LLM systems often requires constructing lengthy natural language input, which may be difficult and time-consuming, especially for complex prompts. Moreover, existing LLM systems often return undesirable responses due, in part, to the difficulties of constructing useful prompts. Additionally, existing LLM systems often generate responses in a format that may not be suitable for subsequent use such as in various data functions or operations.

Few-shot prompting is a technique in which an LLM is given (usually) a small number of examples to guide it in performing a task (e.g., generating a response) indicated by the user input. In this context, an "example" generally refers to an input-output pair of text phrases that are provided to an LLM as part of a prompt to guide its response. These examples may illustrate a desired pattern or format that the LLM should follow when generating answers. The examples may provide the LLM with a better understanding of a task or problem without needing extensive instructions or fine-tuning.

Few-shot prompting can allow the LLM to generalize and complete tasks by leveraging the example(s) provided in real-time. However, the effectiveness of few-shot prompting can depend on selecting ideal examples, such as a set of examples sufficient to guide the LLM to output a desired response. Ideal examples can include examples that are clear and representative of the task indicated in the user input, that cover the range of possible outputs the user might provide (e.g., the examples are not too similar to one another, examples are diverse, etc.), and/or that avoid ambiguity (e.g., multiple interpretations are possible) or contradictory outputs. Ideal examples can include examples that help increase the usefulness of the LLM prompt (e.g., increase the effectiveness of the prompt in inducing a useful LLM response). As the quantity of available examples increases for few-shot prompting, so too does the difficulty in determining which of the available examples are ideal to include in the LLM prompt. For example, if there exist merely 100 available examples for few-shot prompting, and a user desires to select a subset of 10 ideal examples to include in the LLM prompt, the user and/or system has a resulting $1.73 \times 10^{13}$ combinations to choose from.

Conventional few-shot prompting can include static selection of examples (e.g., selecting all available examples to be included with user input). However, as the amount of data (e.g., the quantity of available examples) increases, users/systems may be constrained by processing power, processing time, memory storage limits, context window sizes (e.g., the LLM's token limit), and/or costs. For example, because LLMs process token sequences (e.g., user input, examples, instructions, etc.), the more examples that are included in a user prompt, the longer it may take to process the query and/or the greater the demand on computational resources. This, in turn, may increase costs as costs are often determined on a token-by-token basis. Moreover, LLMs generally have a limited context window (e.g., LLMs can process only a certain number of tokens in one prompt, and examples consume part of this token limit), which can prevent a user/system from including all available examples in a prompt. Large amounts of data may require dynamic selection of examples, such as selecting a subset of examples from a larger set of available examples to be included in the user prompt.

Many techniques for selecting examples can include manual curation of combinations of examples, such as a user choosing examples that they believe are relevant and/or representative of the task indicated in the user input. In some instances, examples may be chosen based on similarity to the user input, such as examples that include similar topics or phrasing (e.g., lexical or semantic similarity, pattern matching, etc.). Conventional techniques can include sequential or incremental selection of examples where a user/system selects examples that build on each other to demonstrate increasingly complex or nuanced aspects of the task, heuristic-based selection where a user/system chooses examples based on a set of rules (e.g., if input involves a customer service inquiry, the user/system selects examples from customer support dialogues), and random or exhaustive selection (e.g., trial and error) where a user/system chooses examples at random or attempts to fit as many examples as possible within a token limit and analyzes the usefulness of the resulting LLM responses. However, such techniques can drain computational resources and/or utilize excessive memory space, may be slow and complex (particularly for users new to prompt engineering), may result in selection of bad examples, and/or may be prohibitively expensive. Moreover, limited context windows may force users/systems to make trade-offs between the quality and quantity of selected examples.

An improved artificial intelligence system (or simply "system") facilitates generating LLM prompts that can increase the usefulness (e.g., accuracy, relevance, effectiveness, etc.) of LLM responses with computational resource efficiency. The system can provide an input form, including various data fields, to a user into which the user may input information relating to a prompt. The input information can include a requested task for the LLM to perform, system tools the LLM may use in performing the task, and/or system data the LLM may query in performing the task. A task can include an operation for the LLM to perform such as data-related operations including data queries, data processing, or data manipulation. One example task can include "scheduling maintenance for the oldest piece of equipment."

The system can augment the user input with additional information, which can reduce the burden of prompt engineering on the user and increase the effectiveness of the prompt in inducing the LLM to generate a useful response. The additional information can be based on the user input. The additional information may include various examples that the LLM can use to achieve a proper (e.g., desired) response. The system may determine a set of ideal examples that can increase the effectiveness of the prompt to help guide the LLM to a useful response. The additional information may include examples of how the LLM may use the various system tools and/or data when responding to the user's requested task.

Systems and methods described herein automatically identify a set of ideal examples, from a larger starting set of available examples, based on similarity clustering of available examples and other statistical and/or artificial analysis of the examples. For example, an artificial intelligence system may be configured to identify clusters of available examples based on similarity of embeddings associated with respective examples. Each cluster may comprise one or more embeddings, and each embedding may correspond to an example in the set of available examples. As further described herein, system and methods can be configured to determine a representative example for each identified cluster. In some embodiments, the representative example may correspond to an embedding that is closest to the average embedding (e.g., centroid) of its respective cluster. As further described herein, each representative example may be an example in the set of available examples and may be dissimilar to each other (e.g., the representative examples can be diverse from each other). For example, each representative example may relate to the user input and may comprise various semantic features such as textual length (e.g., input length), semantic structure, semantic meaning, format, and/or the like that are different from those of all other determined representative examples. By identifying clusters of embeddings and determining which examples are representative of each cluster, the system can identify a subset of ideal examples to pass to an LLM (along with at least a portion of the user input) to induce a useful LLM response. In some embodiments, the system may generate an enhanced prompt based at least in part on the user input and the determined representative examples (e.g., the subset of ideal examples). For example, the enhanced prompt can include at least a portion of the user input and each of the determined representative examples. An enhanced user prompt can increase the usefulness (e.g., accuracy, relevance, effectiveness, etc.) of an LLM response.

In some embodiments, each example in the subset can relate to the user input and may be diverse from every other example in the subset. For example, each ideal example in the subset may be a determined representative example. This subset of ideal examples (e.g., the representative examples) can cover a diverse range of cases, which can help ensure that edge cases or less common input-output pairs are included in a user prompt to prevent the LLM from overfitting to specific patterns.

Advantageously, the systems and methods disclosed herein may increase computational resource efficiency of few-shot prompting by, for example, reducing (or minimizing) processing demands and/or memory storage demands. For example, identifying clusters of embeddings and determining which examples are representative of each cluster to generate an enhanced user prompt prior to calling an LLM may reduce processing and/or memory storage demands on the LLM without reducing (or mitigating reduction of) the quality of the selected examples and/or the effectiveness of the prompt in inducing a useful LLM response. A balance is therefore achieved between providing enough examples in order for the LLM to produce a desired output, while limiting the number of examples to reduce processing and/or memory storage demands. The more limited number of representative examples may effectively include, or are similar to, other examples in the cluster, and hence less examples are needed for input to the LLM to generate a required output. Many few-shot prompting techniques involve iterative processes of determining which examples are ideal to include in the user prompt by, for example, analyzing (either by a user or an AI system) resulting LLM responses. However, by leveraging clustering algorithms and determining representative examples for each cluster, systems and methods described herein can reduce (or minimize) the total number of examples that are processed by an LLM; thus, fewer computational cycles may be required during inference. Moreover, clustering algorithms may utilize less processing power than does calling an LLM (such as when calling an LLM a certain number of times for conventional "try and verify" techniques), which can reduce overall processing demands.

Furthermore, because representative examples are relevant to the user input and diverse from each other, determining representative examples for each cluster of embeddings can help maximize the useful information within a limited context window, which can reduce (or minimize) excessive user input. This may be particularly advantageous when dealing with long prompts or complex tasks that can require detailed user input, where an LLM may otherwise truncate inputs (e.g., due to token limits) and reprocess them, thereby wasting computational resources and increasing expense. Furthermore, systems and methods herein can be scaled to handle more requests with fewer computational resources. In environments where an LLM serves many users simultaneously (e.g., cloud services), identifying clusters of embeddings and determining examples that are representative of each cluster can permit the LLM to handle more requests in parallel without (or mitigating a need for) scaling up hardware resources. This can improve computational resource efficiency in large-scale deployments.

Advantageously, the systems and methods disclosed herein may reduce (or minimize) memory storage demands. Systems and methods disclosed herein may do so without reducing (or mitigating reduction of) the quality of selected examples and/or without reducing (or mitigating reduction of) the effectiveness of generated prompts in inducing useful LLM responses. For example, identifying clusters of embeddings and determining representative examples for each cluster to identify a subset of relevant and diverse examples can reduce (or minimize) a need to preload or maintain large datasets in memory. Because the system may load and process a subset of examples, user prompts may require less memory for temporary storage during processing, reducing the memory footprint during inference.

Additionally, because systems and methods herein can increase computational resource efficiency, the system may consume less energy overall, which can be important in large-scale AI deployments where energy costs may be substantial. Advantageously, by leveraging clustering algorithms and determining representative examples for each cluster to generate an enhanced prompt, it can be possible to utilize smaller LLMs or optimized LLM variants, which consume less memory and require less processing power than do larger LLMs.

Advantageously, the systems and methods disclosed herein may reduce overall computation times for generating useful LLM responses. For example, leveraging clustering algorithms and determining representative examples for each identified cluster can be less processor intensive, and thus quicker, than processing (multiple) prompts by an LLM to determine which examples help guide the LLM to a useful response. Systems and methods disclosed herein may do so without reducing (or mitigating reduction of) the quality of selected examples and/or without reducing (or mitigating reduction of) the effectiveness of a prompt in inducing useful LLM responses. For example, systems and methods herein may reduce the overall time that an LLM spends processing user queries, which may increase LLM response times and reduce overall latency in real-time applications, which can be critical in interactive AI systems.

To facilitate an understanding of the systems and methods discussed herein, several terms are described below. These terms, as well as other terms used herein, should be construed to include the provided descriptions, the ordinary and customary meanings of the terms, and/or any other implied meaning for the respective terms, wherein such construction is consistent with context of the term. Thus, the descriptions below do not limit the meaning of these terms, but only provide example descriptions.

The term "model," as used in the present disclosure, can include any computer-based models of any type and of any level of complexity, such as any type of sequential, functional, or concurrent model. Models can further include various types of computational models, such as, for example, artificial neural networks ("NN"), language models (e.g., large language models ("LLMs")), artificial intelligence ("AI") models, machine learning ("ML") models, multimodal models (e.g., models or combinations of models that can accept inputs of multiple modalities, such as images and text), and/or the like.

A Language Model is any algorithm, rule, model, and/or other programmatic instructions that can predict the probability of a sequence of words. A language model may, given a starting text string (e.g., one or more words), predict the next word in the sequence. A language model may calculate the probability of different word combinations based on the patterns learned during training (based on a set of text data from books, articles, websites, audio files, etc.). A language model may generate many combinations of one or more next words (and/or sentences) that are coherent and contextually relevant. Thus, a language model can be an advanced artificial intelligence algorithm that has been trained to understand, generate, and manipulate language. A language model can be useful for natural language processing, including receiving natural language prompts and providing natural language responses based on the text on which the model is trained. A language model may include an n-gram, exponential, positional, neural network, and/or other type of model.

A Large Language Model ("LLM") is any type of language model that has been trained on a larger data set and has a larger number of training parameters compared to a regular language model. An LLM can understand more intricate patterns and generate text that is more coherent and contextually relevant due to its extensive training. Thus, an LLM may perform well on a wide range of topics and tasks. LLMs may work by taking an input text and repeatedly predicting the next word or token (e.g., a portion of a word, a combination of one or more words or portions of words, punctuation, and/or any combination of the foregoing and/or the like). An LLM may be of any type, including a Question Answer ("QA") LLM that may be optimized for generating answers from a context, a multimodal LLM/model, and/or the like. An LLM (and/or other models of the present disclosure) may include, for example, a NN trained using self-supervised learning and/or semi-supervised learning, a feedforward NN, a recurrent NN, and/or the like. An LLM (and/or other models of the present disclosure) may further include, for example, attention-based and/or transformer architecture or functionality. LLMs can be extremely useful for natural language processing, including receiving natural language prompts and providing natural language responses based on the text on which the model is trained. LLMs may not be data security- or data permissions-aware, because they generally do not retain permissions information associated with the text upon which they are trained. Thus, responses provided by LLMs are typically not limited to any particular permissions-based portion of the model.

While certain aspects and implementations are discussed herein with reference to use of a language model, LLM, and/or AI, those aspects and implementations may be performed by any other language model, LLM, AI model, generative AI model, generative model, ML model, NN, multimodal model, and/or other algorithmic processes. Similarly, while certain aspects and implementations are discussed herein with reference to use of a ML model, language model, or LLM, those aspects and implementations may be performed by any other AI model, generative AI model, generative model, NN, multimodal model, and/or other algorithmic processes.

In various implementations, the LLMs and/or other models (including ML models) of the present disclosure may be locally hosted, cloud managed, accessed via one or more Application Programming Interfaces ("APIs"), and/or any combination of the foregoing and/or the like. Additionally, in various implementations, the LLMs and/or other models (including ML models) of the present disclosure may be implemented in or by electronic hardware such application-specific processors (e.g., application-specific integrated circuits ("ASICs")), programmable processors (e.g., field programmable gate arrays ("FPGAs")), application-specific circuitry, and/or the like. Data that may be queried using the systems and methods of the present disclosure may include any type of electronic data, such as text, files, documents, books, manuals, emails, images, audio, video, databases, metadata, positional data (e.g., geo-coordinates), geospatial data, sensor data, web pages, time series data, and/or any combination of the foregoing and/or the like. In various implementations, such data may comprise model inputs and/or outputs, model training data, modeled data, and/or the like.

Examples of models, language models, and/or LLMs that may be used in various implementations of the present disclosure include, for example, Bidirectional Encoder Representations from Transformers (BERT), LaMDA (Language Model for Dialogue Applications), PaLM (Pathways Language Model), PaLM 2 (Pathways Language Model 2), Generative Pre-trained Transformer 2 (GPT-2), Generative Pre-trained Transformer 3 (GPT-3), Generative Pre-trained Transformer 4 (GPT-4), LLaMA (Large Language Model Meta AI), and BigScience Large Open-science Open-access Multilingual Language Model (BLOOM).

Data Processing Service (or "Service" or "Plug-in"): receives and responds to requests for data and/or data processing. A Plug-in may be accessible via an API that is exposed to an Artificial Intelligence System (and/or other remote systems) and allows data processing requests to be received via API calls from those systems (e.g., an AIS). A few examples of services or plug-ins include a table search service, a filter service, an object search service, a text search service, or any other appropriate search service, indexing services, services for formatting text or visual graphics, services for generating, creating, embedding and/or managing interactive objects in a graphical user interface, services for caching data, services for writing to databases, an ontology traversing service (e.g., for traversing an ontology or performing search-arounds in the ontology to surface linked objects or other data items) or any other data retrieval, processing, and/or analysis function.

Prompt (or "Natural Language Prompt" or "Model Input"): a term, phrase, question, and/or statement written in a human language (e.g., English, Chinese, Spanish, etc.) that serves as a starting point for a language model and/or other language processing. A prompt may include only a user input or may be generated based on a user input, such as by a prompt generation module (e.g., of an artificial intelligence system) that supplements a user input with instructions, examples, and/or information that may improve the effectiveness (e.g., accuracy and/or relevance) of an output from the language model. A prompt may be provided to an LLM, which the LLM can use to generate a response (or "model output").

User Input (or "Natural Language Input"): a term, phrase, question, and/or statement written in a human language (e.g., English, Chinese, Spanish, etc.) that is provided by a user, such as via a keyboard, mouse, touchscreen, voice recognition, and/or other input device. User input can include a task to be performed, such as by an LLM, in whole or in part. User input can include a request for data, such as data accessed and/or processed by one or more services. User input can indicate one or more tools associated with the user request or task which may facilitate performing the task.

User input can indicate one or more data object types associated with a tool. User input can indicate one or more actions associated with a tool. User input can include a user selection of a format for a response from an LLM. User input can include a user-defined variable to which a response may be saved.

Context: any information associated with user inputs, prompts, responses, etc. that are generated and/or communicated to/from the user, the artificial intelligence system, the LLM, the data processing services, and/or any other device or system. For example, context may include a conversation history of all of the user inputs, prompts, and responses of a user session. Context may be provided to an LLM to help an LLM understand the meaning of and/or to process a prompt, such as a specific piece of text within a prompt. Context can include information associated with a user, user session, or some other characteristic, which may be stored and/or managed by a context module. Context may include all or part of a conversation history from one or more sessions with the user (e.g., a sequence of user prompts and orchestrator selector responses or results, and/or user selections (e.g., via a point and click interface or other graphical user interface). Thus, context may include one or more of: previous analyses performed by the user, previous prompts provided by the user, previous conversation of the user with the language model, schema of data being analyzed, a role of the user, a context of the data processing system (e.g., the field), and/or other contextual information.

A context module may provide all or only a relevant portion of context to a selection module for use in selecting one or more plug-ins and/or service orchestrators (e.g., configured to generate requests to plug-ins) for use in generating a properly formatted service request. Context can include tool information. Context can include tool implementation examples. In some embodiments, context may include identification of services and parameters of prior operations, but not underlying data that was accessed or retrieved by the service (e.g., use of graph visualization service and graph parameters without indicating the data illustrated in the graph). In some embodiments, context may include some or all of the underlying data accessed or retrieved by the service.

A Tool can include a set of logic or rules that can be provided to an LLM that the LLM can use to obtain additional information, such as by generating a request for access to additional data via a plug-in. Thus, a tool can be used by an LLM to generate requests (that may be fulfilled by the AIS) to perform operations such as querying datasets, processing data including filtering or aggregating data, writing to datasets (e.g., adding or updating rows of a table, editing or updating an object type, updating parameter values for an object instance, generating a new object instance), implementing integrated applications (e.g., an email or SMS application), communicating with external application programming interfaces (APIs), and/or any other functions that communicate with other external or internal components. Example tools include ontology function tool, date/time tool, query objects tool, calculator tool, and apply action tool. Tools, or the set of logic they comprise for performing one or more operations, may be defined by a system, external database, ontology, and/or a user.

Tool Information can include information associated with a tool that is provided to an LLM and is usable to implement the tool functionality. Tool information can indicate how data is structured, such as in an ontology. Tool information can indicate properties associated with a particular data object type, such as a data object type associated with a selected tool. Tool information can include instructions for implementing a tool. Tool information can include instructions for generating a tool call to use the tool, including instructions for formatting a tool call. In some implementations, tool information can comprise tool implementation examples for executing one or more tool operations which can include pre-defined examples, user-selected examples, user-generated examples, and/or examples that are automatically dynamically configured based on context.

Ontology: stored information that provides a data model for storage of data in one or more databases and/or other data stores. For example, the stored data may include definitions for data object types and respective associated property types. An ontology may also include respective link types/definitions associated with data object types, which may include indications of how data object types may be related to one another. An ontology may also include respective actions associated with data object types or data object instances. The actions may include defined changes to values of properties based on various inputs. An ontology may also include respective functions, or indications of associated functions, associated with data object types, which functions may be executed when a data object of the associated type is accessed. An ontology may constitute a way to represent things in the world. An ontology may be used by an organization to model a view on what objects exist in the world, what their properties are, and how they are related to each other. An ontology may be user-defined, computer-defined, or some combination of the two. An ontology may include hierarchical relationships among data object types.

Data Object (or "Object"): a data container for information representing a specific thing in the world that has a number of definable properties. For example, a data object can represent an entity such as a person, a place, an organization, a market instrument, or other noun. A data object can represent an event that happens at a point in time or for a duration. A data object can represent a document or other unstructured data source such as an e-mail message, a news report, or a written paper or article. Each data object may be associated with a unique identifier that uniquely identifies the data object. The object's attributes (also referred to as "contents") may be represented in one or more properties. Attributes may include, for example, metadata about an object, such as a geographic location associated with the item, a value associated with the item, a probability associated with the item, an event associated with the item, and so forth.

An Object Type is a type of a data object (e.g., person, event, document, and/or the like). Object types may be defined by an ontology and may be modified or updated to include additional object types. An object definition (e.g., in an ontology) may include how the object is related to other objects, such as being a sub-object type of another object type (e.g., an agent may be a sub-object type of a person object type), and the properties the object type may have.

Example System

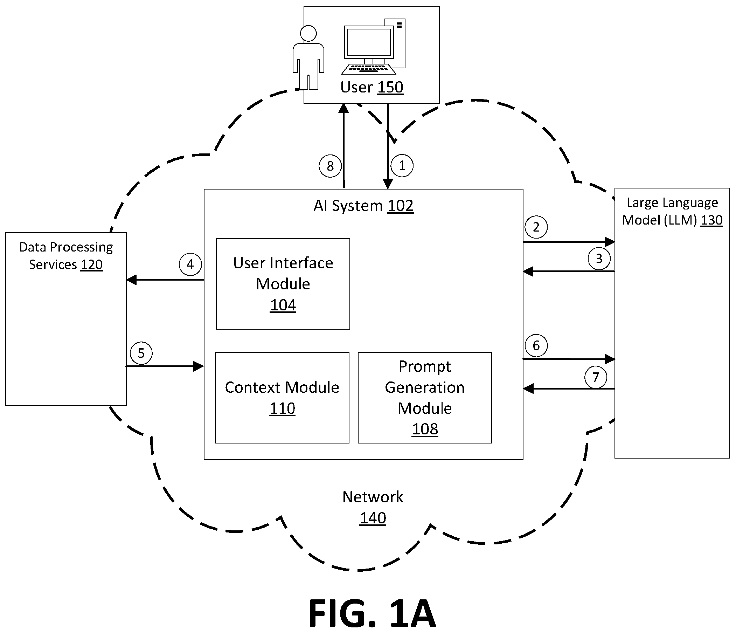

**Figure 1A** is a block diagram illustrating an example **Artificial Intelligence System (or "AIS") 102** in communication with various devices to respond to a user input. In the example of Figure 1A, the Artificial Intelligence System 102 comprises various modules, including a User Interface Module 104, a Prompt Generation Module 108, and a Context Module 110. In other embodiments, the AIS 102 may include fewer or additional components. In some implementations, the Artificial Intelligence System 102 may comprise the user device 150.

In the example of Figure 1A, the various devices are in communication via a network 140, which may include any combination of networks, such as one or more local area network (LAN), personal area network (PAN), wide area network (WAN), the Internet, and/or any other communication network. In some embodiments, modules of the illustrated components, such as User Interface Module 104, Prompt Generation Module 108, and Context Module 110 of the Artificial Intelligence System 102, may communicate via an internal bus and/or via the network 140.

A **user interface module 104** is configured to generate interactive user interface data that may be rendered on a user device 150, such as to receive an initial user input, as well as later user input that may be used to initiate further data processing. In some embodiments, the functionality discussed with reference to the user interface module 104, and/or any other user interface functionality discussed herein, may be performed by a device or service outside of the Artificial Intelligence System 102 and/or the user interface module 104 may be outside the Artificial Intelligence System 102. For example, the user interface module 104 may be comprised, in whole or in part, on the user device 150.

A **context module 110** is configured to maintain, select, and/or provide some or all relevant context associated with a user input, user session, multiple sessions of the user, and/or other context. The context module 110 may store context for various groups of users, e.g., user inputs from multiple users. The Artificial Intelligence System 102, LLM, and/or other components of the system may make use of context in fulfilling their functions. Context may include, for example, all or part of a conversation history from one or more sessions with the user (e.g., a sequence of user inputs and responses or results), user selections (e.g., via a point and click interface or other graphical user interface), data processing services 120 implemented during the session, user-selected objects and any corresponding properties for those objects, any linked objects as defined by a relevant ontology, and the like. As one example, if a most recent result returned to a user included a filtered set of "flight" objects, and a user types "send an email listing the flights to my manager," the AIS 102 may make use of the context of the filtered set of aircraft objects, as provided by the context module, and include a list of those objects in an email.

In some embodiments, the user interface module 104 may suggest certain actions to the user (e.g., any actions described herein, or any other related actions) based on context provided by context module 110 (e.g., email the account manager of the account that is being displayed).

A **prompt generation module 108** is configured to generate a prompt to a language model, such as LLM 130. As described in further detail below, the prompt generation module 108 may generate a prompt based on data provided by the user interface module 104 (e.g., a user input, tool information, etc.), and/or the context module 110 (e.g., conversation history and/or other contextual information). In some embodiments, as further described herein, the prompt generation module 108 can be configured to select and add examples to a user prompt. The prompt generation module 108 may receive examples from the user interface module 104 and/or the context module 110. For example, user input and/or contextual information can include examples, such as input-output pairs of text phrases.

In the example of Figure 1A, a user 150 (which generally refers to human user and/or a computing device of any type that may be operated by a human user) may provide a user input to the Artificial Intelligence System 102 indicating a natural language request for some data analysis to be performed. In some embodiments, the user may select one or more object types to limit processing by the AIS 102 to only those selected object types (which may increase speed and relevance of responses provided by the system), while in other embodiments the user may not provide any information except an initial input.

The Artificial Intelligence System 102 may include and/or have access to the LLM 130 and/or other language model, and the LLM may be fine-tuned or trained on appropriate training data (e.g., annotated data showing correct or incorrect pairings of sample natural language queries and responses). After receiving a user input, the Artificial Intelligence System 102 may generate and provide a prompt to the LLM 130, which may include one or more large language models trained to fulfill a modeling objective, such as task completion, text generation, summarization, etc.

In some implementations, the AIS 102 may be capable of interfacing with multiple LLMs. This allows for experimentation and adaptation to different models based on specific use cases or requirements, providing versatility and scalability to the system. In some implementations, the AIS 102 may interface with a second LLM in order to, for example, generate an input to a data processing service 120, or to generate some or all of a natural language prompt (e.g., generate a prompt for the LLM 130).

The Artificial Intelligence System 102 may also communicate with one or more **Data Processing Services 120** in the course of fulfilling a user input and/or a task. The data processing services 120 may include any quantity of services (or "plug-ins") and any available type of service. For example, the services 120 may include one or more search services (e.g., a table search service, an object search service, a text search service, or any other appropriate search service), indexing services, services for formatting text or visual graphics, services for generating, creating, embedding and/or managing interactive objects in a graphical user interface, services for caching data, services for writing to databases, an ontology traversing service (e.g., for traversing an ontology or performing search-arounds in the ontology to surface linked objects or other data items) or any other services. In some implementations, tool information provided in a prompt to the LLM enables the LLM to return a properly formatted request for further information from a plug-in, such as in the form of an API call to a data processing service. Thus, the LLM 130 may indirectly request (via the AIS 102) for data processing services 120 to perform a specific process. The output from the data processing service 120 may then be provided back to the LLM 130 for further processing of a task and/or to develop a final result to be provided to the user. In some implementations, the data processing services 120 may be a part of the AIS 102 (e.g., as part of a data processing services module of AIS 102). In some implementations, the data processing services 120 may be external to the AIS 102.

Figure 1A includes a set of circles numbered from 1-8 that illustrate an example set of interactions and data that may be exchanged between various devices, such as the user 150, AIS 102, LLM 130, and services 120. In other implementations, the interactions and/or data may be ordered differently. Beginning with interaction 1, the AIS 102 receives a user input from the user device 150. As noted above, the user input can include a term, phrase, question, and/or statement written in a human language (e.g., English, Chinese, Spanish, etc.), a request for data, a task to be performed, information associated with a task to be performed, one or more tools (e.g., a query object tool, an apply action tool, etc.),

one or more tool types (e.g., an object type, an action type, etc.), and/or other information.

Next, at interaction 2 the prompt generation module 108 generates a prompt based on at least the user input. The prompt can include the user input and/or may be generated based on other context, such as may be accessed by the context module 110. In some embodiments, as further described herein, the prompt generation module 108 may identify examples to include in the user prompt such that the user prompt increases the usefulness (e.g., accuracy, relevance, effectiveness, etc.) of an LLM response. For example, the prompt generation module 108 may identify and select one or more examples, and add such examples to the user prompt. The prompt generation module 108 may generate an enhanced user prompt based at least in part on the user input and the identified/selected examples, which may enable the LLM 130 to generate a more useful response. For example, the prompt can include at least part of the original user input and a subset of ideal examples. The enhanced user prompt may help guide the LLM 130 to a useful response.

The prompt can include information associated with one or more tools selected by the user, such as in the form of tool information, which enables the LLM 130 to generate a tool call that can be used by the AIS to communicate with a data processing service. Tool information may indicate, for example, how data that may be accessed by the LLM (via tool calls) is structured, such as in an ontology or other format. Tool information can indicate properties associated with a particular object type, such as an object type selected by the user in the user input at interaction 1. Tool information can include instructions for implementing a tool, instructions for generating a tool call, including instructions for formatting a tool call, tool implementation examples for executing one or more tool operations, and/or other information that may allow the LLM to provide more meaningful responses to the AIS. Tool implementation examples included in an LLM prompt can include pre-defined examples (e.g., the same for each use of the tool), user-selected or user-generated examples, and/or examples that are dynamically configured by the AIS 102 based on context.

Advantageously, supplementing a prompt with context, such as tool information may cause the LLM to generate responses to the prompt that are more useful (e.g., more relevant, accurate, and/or complete). Moreover, implementing AI system 102 to generate prompts, which can include, context, may greatly reduce the burden of prompt design and prompt engineering on a user. Moreover, prompt generation module 108 can generate prompts that are more effective in inducing an LLM to generate useful responses, which may greatly improve the technical field of LLM systems.

Interaction 2 shows the AIS 102 providing a prompt, such as may be generated by prompt generation module 108, to the LLM 130. In response to receiving the prompt, at interaction 3 the LLM 130 provides an output to the AIS 102. The LLM output comprises text that may include a full or partial response to the provided task and/or information indicating additional information that may be requested by the AIS 102. For example, the LLM output can include a tool call formatted according to instructions in tool information includes in prompt. In some implementations, the AIS 102 can parse the LLM output to change a format of data of the LLM output. For example, the AIS 102 may convert a text string of the LLM output to a different data format, such as a data object format that is defined by an ontology. The AIS 102 may convert an LLM output to a data format that is compatible with data processing services 120. Advantageously, reformatting data output from an LLM, such as from one data type to another, may improve the technical field of LLMs such as by providing a system to facilitate integrating the LLM with a data processing service which may greatly expand or enhance the capabilities of LLMs.

If the output from the LLM at interaction 3 includes a tool call, the AIS 102 can generate a request to a data processing service 120 at interaction 4. The request can include the tool call text directly from the LLM output and/or some or all of the tool call text reformatted to be usable by the particular data processing service. The AIS 102 can communicate with the data processing services 120 via one or more API calls, HTTP requests, or the like.

In response to the request, the data processing service 120 can generate data output at interaction 5. For example, the data processing service output may be generated based on implementation of the tool call received at interaction 4. The data output may be formatted according to a structure specified by the data processing service 120, such as according to an ontology. For example, the data output may identify a data object having one or more properties and which can be formatted according to an ontology. Data output may be in various formats, some of which may not be recognizable by the LLM 130 (e.g., non-textual data).

In some examples, the AIS 102 can reformat the data output from the data processing service 120, such as to reformat a data object as a text string. The AIS 102 may parse the data output and extract one or more properties of the data object to be formatted as a string that may be provided to the LLM 130 to accurately "understand" and process data of the data output. Advantageously, the AIS 102 may greatly improve the technical field of LLMs such as by providing a system to facilitate integrating the LLM with data from various sources having various data types which may greatly expand or enhance the capabilities of LLMs.

Next, at interaction 6 the prompt generation module 108 can generate a subsequent prompt based on at least the data output from the data processing service. The subsequent prompt can include some or all of the data output (e.g., reformatted as a string), along with relevant context, such as context provided, generated, and/or accessed by context module 110. Thus, the subsequent prompt can include some or all of the initial prompt (interaction 2) and/or the LLM output (interaction 3). In some examples, a summary of the conversation history is provided in the subsequent prompt, rather than including the full text of the conversation history.

In response to receiving the subsequent prompt, the LLM 130 may generate a subsequent LLM output at interaction 7. The subsequent LLM output may include various information, similar to the first output received at interaction 3. For example, the subsequent LLM output may include a final response to the task, another tool call, and/or other information. In the example of Figure 1A, the subsequent prompt includes a final response, and does not include another tool call. The processes illustrated as interactions 2-6 may be repeated any number of times as the LLM makes additional tool calls to obtain further information and the data processing services outputs are provided back to the LLM.

At interaction 8 the AIS 102 generates a final response that is to provide to the user 150. The final response may include some or all of the subsequent LLM output and/or other information. The final response may be formatted according to a user selection, such as a string of text or data object (or link to data object stored in an ontology). A data object may be identified with a unique identifier associated with an object. The final response may include text, images, maps, interactive graphical user interfaces, datasets, database items, audio, actions, or other types or formats of information. In some implementations, the AIS 102 may modify the LLM output to generate the final response provided to the user. For example, the AIS 102 can parse the subsequent LLM output to change a format of data for inclusion in the final response. In some implementations, the AIS 102 may save the final response as a variable, which may be subsequently provided to the LLM.

Advantageously, the AIS 102 may improve the technical field of LLMs such as by improving the usefulness of LLM responses. LLM 130 may only output data having a certain format (e.g., data formatted as a string). Formatting the data output from the LLM may allow the LLM 130 to provide data that can be more useful to a user, such as if a user requires data in a non-string format such as for subsequent manipulation, functions, or processes.

As shown and/or described, AIS 102 can generate a response to a user input by interacting with LLM 130 and/or with data processing services 120. The AIS 102 can receive data from, and/or provide data to, the LLM 130 and/or data processing services 120. In some implementations, the AIS 102 may interact with the LLM 130 more or less than what is illustrated in Figure 1A, such as to generate a response for a given user input (and associated task or sub-task). In some implementations, the AIS 102 may interact with the data processing services 120 more or less than what is illustrated in Figure 1A, such as to generate a response for a given user input (and associated task or sub-task). In some implementations, the AIS 102 may interact with the data processing services 120 in response to every output from the LLM 130 (except for a final LLM output). In some implementations, the AIS 102 may interact with the LLM 130 in response to every output from the data processing services 120. The number of times the AIS 102 interacts with the LLM 130 and/or with the data processing services 120 may depend on at least the initial user input.

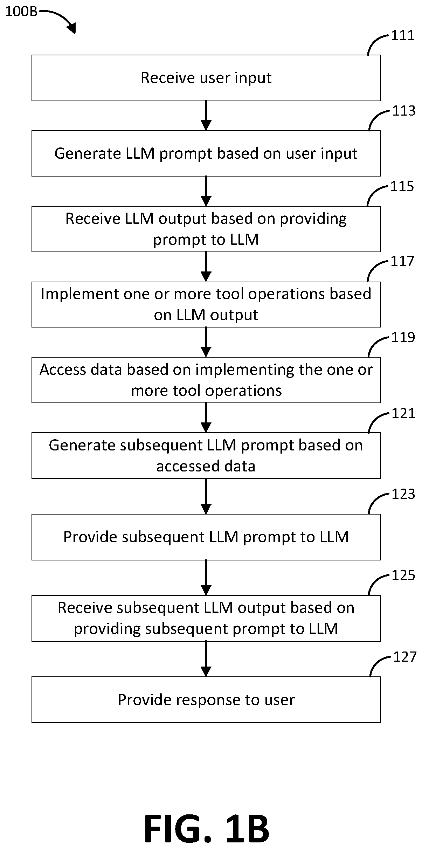

**Figure 1B** is a flowchart illustrating an example process 100B for interacting with an LLM. This process, in full or parts, can be executed by one or more hardware processors, whether they're associated with a singular or multiple computing devices like user device 150, AIS 102, data processing services 120, LLM 130, and even devices in remote or wireless communication. The implementation may vary. For example, it could be controlled by processors related to an AIS, such as AIS 102, or can involve modifications like omitting blocks, adding blocks, and/or rearranging the order of execution of the blocks. Process 100B serves as an example and isn't intended to restrict the present disclosure.

At block 111, an artificial intelligence system ("AIS"), such as AIS 102 shown and/or described herein, can receive a user input. The user input can include various items of information and be received based on multiple input modalities. For example, user input may indicate one or more of:

- one or more tasks for an LLM to perform.
- one or more tools associated with performing the task.
- one or more data object types associated with a tool.
- one or more actions associated with a selected tool.
- a format for a response from the LLM.
- a user-defined variable to which an LLM response may be saved.

The AIS can receive the user input via a user interface of a computing device.

At block 113, the AIS can generate a prompt for an LLM, such as based on the user input. For example, user input may be used by the AIS to identify text content to include in an LLM prompt, such as tool information associated with a tool selected by the user input. In some examples, the user input may be used by the AIS to identify text content to include in an LLM prompt, such as examples (e.g., input-output pairs of text phrases) associated with a task indicated in the user input and to be performed by the LLM. As further described herein, the AIS may identify and select examples based at least in part on the user input, and may add such examples to the LLM prompt. The prompt can include a natural language prompt. The AIS can generate the prompt based on at least the user input. In some embodiments, the AIS can generate an enhanced prompt based at least in part on the user input and identified/selected examples. The prompt can include context. The prompt can include examples associated with one or more tasks indicated in the user input. The prompt can include tool information associated with one or more tools selected by the user. The prompt can include one or more tool implementation examples. The AIS can provide the prompt to the LLM.

At block 115, the AIS can receive an LLM output. The AIS can receive the LLM output in response to providing the prompt to the LLM. For example, an LLM may process the prompt and generate a response to the prompt which the AIS can receive as the LLM output. The LLM output can include a string of text. The LLM output can include a tool call configured to cause a data processing service to perform one or more tool operations, such as in response to the AIS providing the tool call to the data processing service. In some implementations, the LLM output can comprise a tool call configured to perform a database query. The tool call can be formatted according to tool information included in a prompt generated by the AIS and provided to the LLM.

The AIS can parse the LLM output to change a format of data of the LLM output. The AIS may convert a string of the LLM output to a different data format. In some implementations, the AIS may convert an LLM output data format to a data format defined by an ontology, such as a data object format. The AIS may convert an LLM output, such as text of a tool call including in the LLM output, to a data format that is compatible with a data processing service. Advantageously, reformatting data output from an LLM, such as from one data type to another, may improve the technical field of LLMs such as by providing a system to facilitate integrating the LLM with a data processing service which may greatly expand or enhance the capabilities of LLMs.

At block 117, the AIS can implement one or more tool operations based on the LLM output. For example, the LLM output may comprise a tool call which may cause the AIS to perform one or more tool operations associated with the tool call. In some implementations, the AIS may query a database based on a tool call in the LLM output. In some implementations, the AIS may process data based on the LLM output, such as filtering and/or aggregating data. In some implementations, the AIS may cause a data processing services to query a database based on the LLM output (e.g., by sending the tool call included in the LLM output to the data processing service via an API call). The database may be external and/or remote to the AIS. The database may be comprised within a same system or device as the AIS.

At block 119, the AIS may access data based on implementing one or more tool operations, such as data that is returned from a data processing service in response to a tool call sent from the AIS. Thus, accessing the data can include receiving the data from a data processing services. Accessing the data can include retrieving the data from a database. The data can include data structured according to an ontology. The data can include a data object having a data object type and one or more properties.

At block 121, the AIS may generate a subsequent LLM prompt. The subsequent LLM prompt may comprise the data, or portions thereof, accessed at block 119 (e.g., an output from a data processing service that was called based on a tool call included in the initial LLM response). The subsequent LLM prompt can include context such as some or all of conversation history, such as some or all of the LLM prompt generated at block 113 and/or the LLM output at block 115. In some implementations, the AIS can generate the subsequent LLM prompt based on reformatting the data accessed at block 119. For example, data accessed at block 119 may comprise a data object having one or more properties that are formatted according to an ontology. The AIS may reformat the data (e.g., the data object) as a text string that is more easily understandable by the LLM. The AIS may parse the data and extract one or more properties of the data to be formatted as a string. The AIS can provide the subsequent LLM prompt to the LLM.

At block 123, the AIS can receive a subsequent LLM output. The AIS can receive the subsequent LLM output in response to providing the subsequent prompt to the LLM. For example, an LLM may process the subsequent prompt and generate a response to the subsequent prompt which the AIS can receive as the subsequent LLM output. The subsequent LLM output can include a string of text. The subsequent LLM output can include a response to the user input. In some implementations, the LLM output may not include a tool call. In some implementations, The LLM output can include an additional tool call, which may be executed by the AIS in the same manner as discussed above with reference to blocks 117-119.

At block 125, the AIS can provide a response to the user. The response may include and/or be based on the subsequent LLM output. The AIS may generate the response based on reformatting the LLM output. The AIS can parse the subsequent LLM output to change a format of data of the subsequent LLM output. The AIS may convert a string of the subsequent LLM output to a different data format. In some implementations, the AIS may convert a subsequent LLM output data format to a data format defined by an ontology, such as a data object format, which may be linked to a separate software application for viewing information regarding the data object. The AIS may convert an LLM output to a data format that is compatible with a data processing service. The AIS may convert an LLM output to a data format that is selected by a user. Parsing the subsequent LLM output may improve the usefulness of the subsequent LLM output, such as by rendering the output compatible with a data processing service and/or with a user's purposes to facilitate further manipulating and/or processing the data. Advantageously, reformatting data output from an LLM, such as from one data type to another, may improve the technical field of LLMs such as by providing a system to improve the usefulness of LLM outputs.

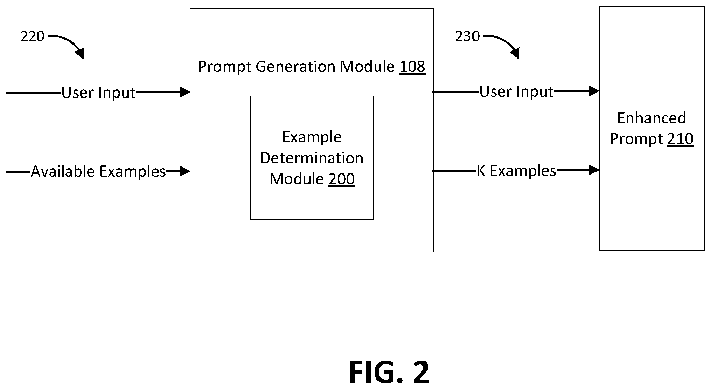

Figure 2 is an example schematic input and output flow diagram illustrating how one or more modules of the AIS 102 may interact to generate an enhanced user prompt 210. For example, the prompt generation module 108 can be configured to receive one or more inputs 220 and generate and output one or more outputs 230 to generate the prompt 210 for LLM 130. The prompt generation module 108 may be configured to process the one or more inputs 220, such as to generate the user prompt 210.

In the embodiment of Figure 2, the prompt generation module 108 includes an example determination module 200 configured to identify a subset of ideal examples for inclusion in the enhanced prompt 210. As shown in Figure 2, inputs to the example determination module 200 may include user input and available examples, or data indicative of user input or available examples. In some embodiments, the user input can indicate a quantity of examples (e.g., K examples) to include in the prompt 210. In some embodiments, the quantity of examples to include in the prompt 210 may be dynamically determined by the prompt generation module 108 based on various factors, such as characteristics of one or more of the prompt, context, LLM, or available examples.

In some embodiments, the set of available examples to potentially include in enhanced user prompt 210 can include all examples generally available to the system (e.g., AIS 102) for prompt generation by the prompt generation module 108. In some embodiments, the set of available examples (e.g., the set of potential examples) may include fewer than all generally available examples. For example, the set of available examples may be a subset of all examples generally available to the AIS. In some embodiments, the set of available examples can include examples related to the user input (e.g., relevant examples), such as examples related to the task to be performed by the LLM 130 and/or that are semantically similar (e.g., similar and/or same words, phrases, meaning, etc.) to the user input. In some embodiments, the set of available examples to potentially include in the enhanced user prompt may include only relevant examples. The set of available examples may include input-output pairs (such as input-output pairs of text phrases) to help guide the LLM to perform a task. The set of available examples may demonstrate desired tasks and serve as training instances within the prompt itself, showing the LLM how to respond to user input. The set of available examples can include ideal examples. Ideal examples can include examples that are relevant to the user input and diverse from each other. For example, ideal examples may relate to the task to be performed by the LLM and may have various different semantic features (e.g., input length, semantic structure, semantic meaning, format, etc.). Ideal examples can increase the effectiveness of a user prompt. For example, ideal examples can help guide the LLM to generate useful (e.g., accurate, relevant, effective, etc.) results. However, the set of available examples can include nonideal examples, such as examples that can confuse the LLM and induce non-optimal (e.g., inaccurate, irrelevant, ineffective, duplicative, etc.) results. Different combinations (e.g., subsets) of examples within the set of available examples may be ideal or nonideal.

Examples generally available to the AIS for prompt generation by the prompt generation module 108 may be manually curated by a user and stored in memory (e.g., stored by the context module 110 described herein). In some embodiments, generally available examples may be captured over time via usage based on user feedback of previously identified correct or incorrect LLM responses (e.g., train and verify). For example, a user may have an LLM inbox comprising LLM responses, and the user (or an AI system, e.g., AIS 102) can evaluate the usefulness of the LLM responses. The user (or system) may retrieve prompts that induced useful responses for inclusion in the generally available examples. In some embodiments, the system may generate synthetic examples for inclusion in the generally available examples. In some embodiments, generally available examples can be a predefined library of examples to which the AIS 102 has access.

As described herein, prompt generation module 108 can receive data indicative of user input from user interface module 104. In some embodiments, the prompt generation module 108 can receive data indicative of available examples from user interface module 104 (e.g., the user includes examples in the user input), from the context module 110, and/or from some other data store of examples. In some embodiments, the example determination module 200 may determine which of the generally available examples are related to the user input, such as related to the task to be performed by the LLM and/or semantically similar (e.g., similar and/or same words, phrases, meaning, etc.) to the user input.

The example determination module 200 may be configured to select a set of available examples to potentially include in the enhanced user prompt to induce a useful LLM response, such as based on user input and the generally available examples (e.g., data indicative of user input and data indicative of available examples). In some embodiments, a user may select a set of available examples to potentially include in an enhanced user prompt. The user may select the set of available examples from a larger set of generally available examples. In some embodiments, a user may select a set of available examples for potential inclusion in an enhanced user prompt such that the set of available examples passed into the example determination module 200 includes only relevant examples. Such a set of available examples may include fewer than all examples that are generally available to the AIS for prompt generation.

In some embodiments, the example determination module 200 may be configured to automatically select a set of available examples for potential inclusion in an enhanced user prompt. The example determination module 200 may be configured to implement similarity search algorithms, text search algorithms, distance-based algorithms, and/or the like to determine which of the generally available examples are relevant (e.g., related to the user input, related to the task to be performed by the LLM, etc.). In some embodiments, the example determination module 200 may be configured to implement tag-based matching (e.g., part-of-speech matching) and/or keyword searching to determine which of the generally available examples are relevant. As further described herein, the example determination module 200 may compare the user input to the tags assigned to the generally available examples, and select examples whose corresponding tags match the user query. In some embodiments, as further described herein, the example determination module 200 may compare text words (e.g., keywords) and/or text phrases (e.g., key phrases) in the user input to those in the generally available examples, and select examples whose keywords/key phrases match the user query.

In some embodiments, the example determination module 200 may generate, for each generally available example, an embedding representative of the generally available example and compare each embedding to the tokenized user input (e.g., the user prompt) such as according to a predetermined threshold. The example determination module 200 may determine a distance metric (e.g., Euclidian distance, cosine similarity, etc.) between each embedding and the user input, and compare the determined distance metric to a predetermined distance metric threshold.

The example determination module 200 may perform filtering on examples based on the user input, such as on examples that do not satisfy the predetermined distance metric threshold. For example, the example determination module 200 may be configured to determine that a determined distance metric does not satisfy the predetermined distance metric threshold based on a determination that a determined distance metric value is greater than a predetermined distance metric threshold value. The example determination module 200 may filter out irrelevant examples (examples associated with embeddings that do not satisfy the predetermined threshold) such that the set of available examples includes only relevant examples.

In some embodiments, the example determination module 200 may generate, for each example in the set of available examples, an embedding representative of that example. The example determination module 200 may be configured to analyze the embeddings via, for example, statistical processes. An embedding is an n-dimensional vector representation (e.g., a list of numbers) of natural language in an n-dimensional vector space. For example, an embedding may be represented as $x_i = [x_{i1}, x_{i2}, ..., x_{in}]$, where each $x_{in}$ is scalar and $x_i$ is an n-dimensional vector. Embeddings can represent various data types such as words, sentences, paragraphs, and the like (and/or other modalities such as images, audio, etc.), in a way that captures semantic relationship or features of the data. In some embodiments, each generated embedding may correspond to an example in the available examples. Generated embeddings that are close to each other in the vector space may indicate that their corresponding examples are semantically related. For example, embeddings corresponding to the words "boy" and "girl" may be closer together in the vector space than are embeddings corresponding to the words "boy" and "apple."

The example determination module 200 may identify one or more clusters of embeddings based at least in part on the inputs 220. For example, the example determination module 200 may be configured to identify K clusters of embeddings based at least on the set of available examples, such as the relevant examples selected by the user and/or the set of relevant examples selected by the example determination module 200. As further described herein, the quantity K of identified clusters may correspond to the quantity K of examples determined to be included in the enhanced user prompt.

The example determination module 200 may be configured to identify K clusters of embeddings based on data indicative of the set of available examples (e.g., generated embeddings). The example determination module 200 can be configured to identify K clusters of embeddings using a clustering algorithm and to analyze the clusters of embeddings via, for example, statistical processes. A cluster of embeddings can refer to a group of embeddings that are similar to each other in an n-dimensional vector space. For example, a plurality of embeddings may be grouped together based on their proximities in the vector space, indicating semantic similarities between the associated examples. In some examples, words such as "boy" and "girl" may be clustered together, whereas words such as "boy" and "apple" may not be clustered together. By leveraging clustering algorithms, the system may be configured to determine patterns, relationships, and/or categories between the various represented examples.

Each embedding in a single cluster of embeddings may correspond to an example in the set of available examples. Each embedding in each cluster may correspond to an example that is relevant to the user input (e.g., related to the task to be performed by the LLM and/or semantically similar to the user input). The example determination module 200 may be configured to determine a subset of ideal examples based on the clusters of embeddings via, for example, statistical processes. In some embodiments, the example determination module 200 may be configured to determine, for each generated cluster of embeddings, a representative example, as further described herein. A representative example for a cluster may correspond to an embedding in that cluster that is closest to the centroid of that respective cluster. A representative example may relate to the user input and may be diverse from every other determined representative example. For example, a representative example may relate to the task to be performed by the LLM and may include various semantic features (e.g., input length, semantic structure, semantic meaning, format, etc.) that are different from those of every other determined representative example.

In some embodiments, the example determination module 200 may determine a subset of ideal examples (e.g., K examples) based on the one or more identified clusters of embeddings. The example determination module 200 may identify a subset of ideal examples that corresponds to the determined representative examples. For example, the example determination module 200 may be configured to identify each closest embedding, and the corresponding example, from its respective cluster. The subset of ideal examples may comprise all of the determined representative examples (e.g., one example per cluster) such that each example in the subset of ideal examples may correspond with an identified closest embedding (e.g., one embedding per cluster). Each example in the subset of ideal examples may be in the set of available examples.

The enhanced prompt 210 may include the original user input and K examples, where K represents a quantity of examples associated with the closest embeddings. Thus, the K examples may be the subset of ideal examples (e.g., the representative examples), where each of the K examples is in the set of available examples.

The prompt 210 may induce the LLM 130 to generate a more useful response than only the original user prompt or a prompt with a non-optimal set of examples. For example, the prompt 210 may increase the usefulness (e.g., accuracy, relevance, effectiveness, etc.) of the LLM response. A useful response can include a response desired by the user.

## Example Method

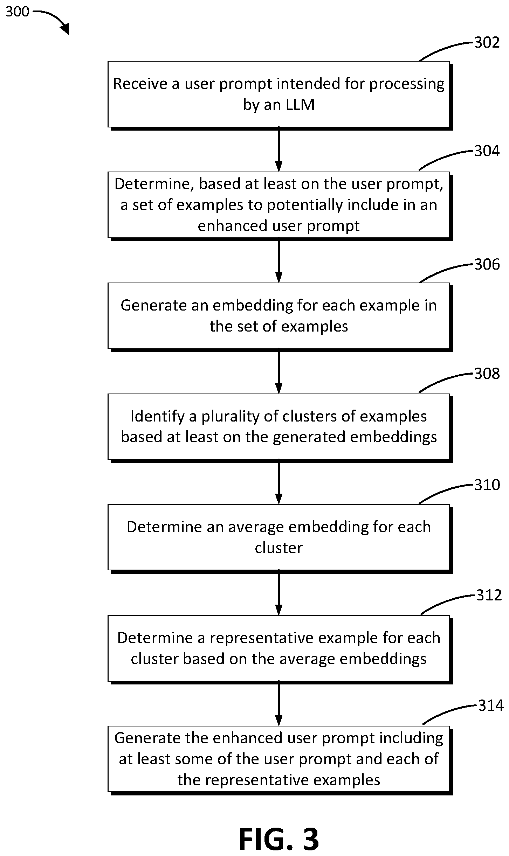

Figure 3 is a flowchart illustrating an example process 300 for generating an enhanced user prompt. The process 300, or portions thereof, can be implemented by a computing device such as a hardware processor. In some embodiments, the process 300, or portions thereof, can be performed by a computing device associated with AIS 102, such as the prompt generation module 108 described herein. In some embodiments, the process 300 or portions thereof, can be performed by the example determination module 200 described herein.

At block 302, in some embodiments, the system (e.g., prompt generation module 108) can receive a user prompt intended for processing by an LLM (e.g., LLM 130). The user prompt can include an initial user input such as textual phrases. In some embodiments, the user prompt can include context, such as examples (e.g., input-output pairs of text phrases) In some embodiments, at block 302, the system may receive the user input via a user device (e.g., device 150) and/or the user interface module 104.

At block 304, in some embodiments, the system may determine a set of available examples to potentially include in an enhanced user prompt, such as a set of relevant examples. The system may be configured to determine the set of potential examples based at least on the original user prompt (e.g., the initial user input).

As described herein, in some embodiments, a user may select relevant examples to potentially include in an enhanced user prompt. Relevant examples may include examples that relate to the task to be performed by the LLM and/or are semantically similar (e.g., similar and/or same words, phrases, meaning, etc.) to the user input. The user may select the set of relevant examples from a larger set of examples that are generally available to the system for prompt generation. In some embodiments, the original user prompt can indicate the set of manually selected relevant examples.

In some embodiments, at block 304, the system may automatically select a set of relevant examples to potentially include in an enhanced user prompt. The system may be configured to determine which examples of the generally available examples are relevant to the user input via, for example, various different similarity search algorithms and/or text search algorithms. In some embodiments, for example, at block 304, the system may be configured to implement tag-based matching (e.g., part-of-speech matching). A tag can include a label that is assigned to an example, and which may identify a characteristic, keyword, attribute, category, etc., of its assigned example. Tags may be previously assigned (e.g., by a user, automatically by the system) to the examples that are generally available to the system for prompt generation. The system may compare the user input to the tags associated with the generally available examples, and select examples whose associated tags match the user query. In some embodiments, matching may be exact (e.g., only examples having an exact tag match are selected) or fuzzy (e.g., examples having a similar or related tag are selected).

In some embodiments, at block 304, the system may be configured to implement keyword searching (e.g., term-frequency-inverse document frequency, Boolean logic, etc.). For example, the system may directly match text words and/or text phrases in a user query with those of the generally available examples. In some embodiments, matching may be exact (e.g., only examples having the exact keyword are selected). In some embodiments, matching may be fuzzy (e.g., examples having variations of the keyword or similar keywords may be selected).

In some embodiments, at block 304, the system may automatically select a set of available examples to potentially include in an enhanced user prompt via, for example, distance-based algorithms. In some embodiments, for example, the system may generate an embedding for each generally available example and compare each embedding to the user prompt (e.g., the tokenized user input). In some examples, the system may be configured to compare each embedding to the user prompt such as according to a predetermined threshold.

In some embodiments, at block 304, the system may determine a distance metric (e.g., Euclidian distance, cosine similarity, etc.) between an embedding corresponding to a generally available example and the user prompt, and compare the determined distance metric to a predetermined distance metric threshold. For example, the system may be configured to determine that a generally available example is relevant to the user input based on a determination of whether the determined distance metric satisfies the predetermined distance metric threshold. In some examples, the system may determine that the determined distance metric does not satisfy the predetermined distance metric threshold based on a determination that a determined distance metric value is great than a predetermined distance metric threshold value. In some examples, the system may determine that the determined distance metric satisfies the predetermined distance metric threshold based on a determination that the determined distance metric value is less than or at the predetermined distance metric threshold value.

At block 304, in some embodiments, predetermined distance metric threshold values may be fixed or programmable.

The system may perform filtering on examples that do not satisfy the predetermined distance metric threshold. In some embodiments, responsive to a determination that a generally available example does not satisfy a predetermined threshold (e.g., a determined distance metric does not satisfy a predetermined distance metric threshold), the system may filter out the example from potential inclusion in an enhanced user prompt. For example, the system may filter out from a set of available examples any generally available examples that are not relevant to the user input such that the set of available examples (potentially included in an enhanced user prompt) includes only relevant examples.

At block 306, in some embodiments, the system may generate, for each example in the set of available examples, an embedding representative of the example. As described herein, the embedding is a vector representation of the example in an n-dimensional vector space. The embedding may capture various semantic features of the corresponding example, such as input length, semantic structure, semantic meaning, format, and/or the like. Each embedding may represent an example that is related (e.g., relevant) to the user input, such as an example that is related to the task to be completed by the LLM and/or that is semantically similar (e.g., similar and/or same words, phrases, meaning, etc.) to the user input.

In some embodiments, if the system previously generated embeddings for the set of available examples (e.g., such as when automatically selecting a set of examples via distance-based algorithms), the process may proceed to block 308 without recalculating embeddings for the set of examples.

At block 308, in some embodiments, the system can identify K clusters of examples based at least on the corresponding generated embeddings. As described herein, the user input may indicate a quantity K of examples to include in an enhanced prompt to increase the usefulness of the prompt. The quantity K of identified clusters may correspond to the quantity K of examples indicated in the user input. For example, if the user input indicates that the system should augment (e.g., add) the original user prompt with 10 examples, the system may identify 10 clusters of embeddings.

In some embodiments, at block 308, the quantity K of identified clusters may be based at least in part on the size of the context window of the LLM. For example, the system may determine to identify K clusters of embeddings corresponding to K examples based at least in part on the quantity of available tokens, the length of available examples, and the length of the user input (the user input consumes part of the token limit, leaving a certain number of remaining tokens for examples). The system may determine the quantity of tokens required based on the quantity of queries the user wishes to input. The system may be configured to iteratively determine (e.g., in a closed loop) a quantity K until it finds the quantity of examples that can fit in the context window. For example, the system may be configured to implement linear optimization, an exponential search, a binary search, and/or the like to determine the quantity K.

In some embodiments, at block 308, the system may determine to identify K clusters based at least in part on previous prompts that induced useful responses (e.g., an LLM inbox). For example, the system may determine a quantity K based at least in part on the quantity of examples that were included in previous useful prompts (e.g., prompts that induced useful LLM results). In some examples, the system may be configured to arbitrate between a quantity K of examples (having corresponding token lengths and associated costs) and the effectiveness of the LLM responses that resulted from corresponding prompts that included the quantity K of examples. The system may arbitrate between the quantity K of examples and the effectiveness of the prior LLM responses according to one or more predetermined thresholds. For example, the system may be configured to determine the quantity K based on a ground truth set to determine a point of diminishing returns. In some examples, based on known correct (e.g., useful) previous LLM responses, the system may determine that inclusion of 1 example in the prompt induced an LLM response that was 50% correct, that inclusion of 10 examples in the prompt induced an LLM response that was 80% correct, that inclusion of 100 examples in the prompt induced an LLM response that was 81% correct, etc. The system, based on the arbitration, for example, may determine that 10 is the optimal number K of examples to include in the user prompt.

At block 308, the system may be configured to leverage a clustering algorithm to identify one or more clusters of examples/embeddings. In some embodiments, as further described herein, the system may be configured to implement K-means clustering to identify the K clusters of embeddings. For example, the system may identify K distinct, non-overlapping clusters of embeddings, where K represents the quantity of clusters as described herein. The quantity of K clusters may be based on the quantity K of examples indicated in the user input, the size of context window of the LLM, previous prompt-LLM response pairs (e.g., an LLM inbox), combinations thereof, and/or the like.

At block 308, each cluster of embeddings may comprise one or more generated embeddings. Embeddings within the same cluster may be more similar to each other (e.g., closer in proximity in the vector space) than to those in other clusters such that intra-cluster variance is reduced (or minimized). For example, available examples that have similar semantic meanings to each other may correspond to respective generated embeddings that are close in proximity to each other in the vector space. In some embodiments, the system may be configured to determine the similarity/proximity of generated embeddings via determination of various distance metrics, such as cosine similarity, Euclidian distance, and/or the like. Intra-cluster variance can refer to the distance between embeddings and the centroid (e.g., center) of their assigned cluster. The centroid of a cluster can correspond to the central point in vector space that represents the average position of all embeddings within the cluster (e.g., the mean of all elements of all embeddings in the cluster).

The system may identify K initial centroids, which may be determined at random or via other means, such as K-means++. For example, the system may select a first initial centroid at random from the generated embeddings (corresponding to the set of available examples), and for each subsequent centroid, may compute the distance from each remaining embedding to the nearest already-chosen centroid and select the next centroid with a probability proportional to the square of the distance. Embedding farther (in the vector space) from the nearest existing centroid (e.g., the initial centroid) can have a higher chance of being selected as the next centroid. The system may repeat this process until K centroids are identified.

At block 308, the system may assign each embedding to the nearest centroid based on a distance metric, such as the Euclidian distance. The system may place each embedding into a cluster whose centroid is closest to the respective embedding.

The system may be configured to reduce (or minimize) an objective function, such as the within-cluster sum of squares (WCSS). WCSS may be defined as follows:

$$(1)\ WCSS = \sum_{i=1}^{K} \sum_{x \in C_i} ||x - \mu_i||^2,$$

Where:

$C_i$ is the set of data points in cluster i,
$\mu_i$ is the centroid of cluster i, and
$\|x - \mu_i\|^2$ is the squared Euclidian distance between data point x and the centroid $\mu_i$.

For example, after the system assigns embeddings to the K clusters, the system may recompute the centroid of each cluster, where the centroid is calculated as the mean of all the elements of all embeddings in the cluster. The system may compute a new centroid, where the new centroid reduces (or minimizes) the squared distance (e.g., the squared Euclidian distance) between itself and the other embeddings in the cluster. The system may reassign embeddings to the new centroids, such as described hereinabove, and subsequently reupdate the centroids. The system may implement this process as a closed loop such that the generated embeddings are continuously reassigned and new centroids are continuously recalculated until, for example, the centroids no longer change between iterations (e.g., convergence) or the change in the centroids satisfies a predetermined threshold. In some embodiments, embeddings may be continuously reassigned and new centroids continuously recalculated until the process satisfies a predetermined threshold such as a maximum number of iterations.

Although the example of Figure 3 discusses K-means clustering, this is not intended to be limiting; any number of clustering algorithms may be used to generate the one or more clusters of examples.

At block 310, in some embodiments, the system can determine an average embedding (e.g., centroid) for each cluster of embeddings. The average embedding of a cluster may correspond to the centroid of that cluster in vector space. For example, the average embedding of a cluster can correspond to the mean of all embeddings in the respective cluster. The system may be configured to determine the centroid by averaging, on an element-by-element basis, over all elements of all embeddings in the cluster. However, the average embedding itself may not correspond to an available example (e.g., the average embedding may not have any associated semantic meaning).

For a given cluster having embeddings $\{x_1, x_2, ..., x_n\}$, the system may calculate the average embedding as follows:

$$(2)\ \mu = \frac{1}{n}\sum_{i=1}^{n} x_i,$$

Where:

n is the quantity of embeddings in the cluster,
$x_i$ is the i-th embedding, and
$\mu$ is the resulting average embedding (e.g., centroid), which is a vector in the same dimensional space as the embeddings.

At block 312, the system may determine a representative example for each cluster of embeddings based on the average embedding of the respective cluster. The representative example for a cluster may correspond to the embedding that is closest (e.g., the closest embedding) to the average embedding of that respective cluster. At block 312, the system may be configured to determine a representative example for a cluster by comparing, on an embedding-by-embedding basis, each embedding of the cluster to the centroid of that cluster.

For example, in some embodiments, at block 312, the system may be configured to determine the straight-line distance (e.g., the Euclidian distance) between each embedding in a cluster and the centroid (e.g., average embedding) of that cluster. The Euclidian distance between two vectors may be defined as follows:

$$(3)\ d(x, \mu) = \sqrt{\sum_{j=1}^{n}(x_j - \mu_j)^2},$$

Where:

$x = [x_1, x_2, ..., x_n]$ is the embedding, and
$\mu = [\mu_1, \mu_2, ..., \mu_n]$ is the centroid.

The system may be configured to determine that the embedding in a cluster having the smallest Euclidian distance between it and the centroid of its cluster is the closest embedding of that cluster. Consequently, the system may be configured to determine that the representative example for a cluster corresponds to the embedding with the smallest Euclidian distance between it and the respective centroid.

In some examples, at block 312, the system may be configured to determine the angle (e.g., cosine similarity) between embedding in a cluster and the centroid (e.g., average embedding) of that cluster. The cosine similarity between two vectors may be defined as follows:

$$(4)\ \cos(x, \mu) = \frac{x \cdot \mu}{||x|| ||\mu||},$$

Where:
x is the embedding and $\mu$ is the centroid.

The system may be configured to determine that the embedding having a cosine similarity between it and the centroid of its cluster that is closest to 1 is the closest embedding of that cluster. Consequently, the system may be configured to determine that the representative example for a cluster corresponds to the embedding having a cosine similarity between it and the respective centroid that is closest to 1.

At block 312, each determined representative example may be an ideal example that is included in an enhanced user prompt. In some embodiments, each determined representative example may make up a subset of ideal examples such that each example in the subset of ideal examples is a determined representative example (e.g., one from each identified cluster). As described herein, each determined representative example may be relevant to the user input and may be diverse from every other determined representative example. The representative examples, collectively (e.g., as a subset of ideal examples), may cover a wide variety/range of cases rather than being mere permutations of one another. Advantageously, this can help ensure that edge cases or less common input-output pairs are included in the enhanced user prompt (e.g., prompt 210) to prevent the LLM from overfitting to specific patterns. In some embodiments, at block 312, the system may rank the determined representative examples based on their relevance to the user input.

At block 314, in some embodiments, the system may generate an enhanced user prompt (e.g., prompt 210) based at least on the user input and the determined representative examples (e.g., the subset of ideal examples). The enhanced prompt may include at least a portion of the initial user prompt (e.g., at least a portion of the user input). The enhanced prompt may include each of the representative examples. For example, at block 314, the system may augment the initial user prompt with the determined representative examples such that the generated enhanced prompt includes at least a portion of the initial user prompt and each of the determined representative examples. In some embodiments, the system may be configured to convert the initial user prompt and the identified closest embeddings (e.g., one from each identified cluster) into the enhanced user prompt. In some embodiments, the enhanced user prompt can include top-ranked (e.g., based on relevance to the user prompt) examples, such as top-ranked representative examples.

As described herein, an enhanced user prompt can include a prompt that increases the usefulness (e.g., accuracy, relevance, effectiveness, etc.) of an LLM response. An enhanced user prompt can induce a useful LLM response. In some embodiments, at block 314, the system may provide the enhanced user prompt to the LLM (e.g., LLM 130).

Although the example of Figure 3 discusses a process of determining a subset of ideal examples from available examples in which the available examples include text (e.g., data in written form), this is not intended to be limiting. Systems and methods described herein may be configured to determine a subset of ideal examples associated with multi-modal data including, but not limited to, text, images, audio, video, sensor data, combinations thereof, and the like. For example, in some embodiments, available examples may include combinations of text and images, and the system may be configured to determine an ideal subset of such examples. The system may be configured to identify clusters of embeddings corresponding to the text for analysis by the system (such as described herein) in a first vector space. The system may be configured to identify clusters of embeddings corresponding to the images for analysis by the system (such as described herein) in a second vector space. In some embodiments, the system may be configured to identify clusters comprising embeddings that combine multiple data types (e.g., text and image) for analysis by the system (such as described herein) in a unified vector space.

Systems and methods described herein may be configured to determine representative examples for clusters of embeddings associated with multi-modal data, such as for clusters of embeddings associated with text data and/or clusters of embeddings associated with image data (or any other data type). The system may identify a subset of ideal multi-modal examples based on the determined representative examples associated with the multi-modal data, and may augment user input with such examples. In some embodiments, the system may be configured to identify one or more subsets of ideal examples corresponding to each data type (e.g., a first ideal subset of text examples, a second ideal subset of image examples, a third ideal subset of audio examples, etc.). In some embodiments, the system may be configured to identify a subset of ideal examples that includes combinations of various data types (e.g., the multi-modal data). In some embodiments, the system may be configured to convert the user input and representative examples associated with the multi-modal data into an enhanced user prompt (e.g., prompt 210).

Additional Example Implementations and Details

In an implementation, the systems or devices described herein (e.g., one or more aspects of the AIS 102, data processing services 120, user device 150, LLM 130 and/or the like) may comprise, or be implemented in, a "virtual computing environment". As used herein, the term "virtual computing environment" should be construed broadly to include, for example, computer-readable program instructions executed by one or more processors to implement one or more aspects of the modules and/or functionality described herein. Further, in this implementation, one or more services/modules/engines and/or the like of the system may be understood as comprising one or more rules engines of the virtual computing environment that, in response to inputs received by the virtual computing environment, execute rules and/or other program instructions to modify operation of the virtual computing environment. For example, a request received from a user computing device may be understood as modifying operation of the virtual computing environment to cause the request access to a resource from the system. Such functionality may comprise a modification of the operation of the virtual computing environment in response to inputs and according to various rules. Other functionality implemented by the virtual computing environment (as described throughout this disclosure) may further comprise modifications of the operation of the virtual computing environment, for example, the operation of the virtual computing environment may change depending on the information gathered by the system. Initial operation of the virtual computing environment may be understood as an establishment of the virtual computing environment. In some implementations the virtual computing environment may comprise one or more virtual machines, containers, and/or other types of emulations of computing systems or environments. In some implementations the virtual computing environment may comprise a hosted computing environment that includes a collection of physical computing resources that may be remotely accessible and may be rapidly provisioned as needed (commonly referred to as "cloud" computing environment).

Implementing one or more aspects of the system as a virtual computing environment may advantageously enable executing different aspects or modules of the system on different computing devices or processors, which may increase the scalability of the system. Implementing one or more aspects of the system as a virtual computing environment may further advantageously enable sandboxing various aspects, data, or services/modules of the system from one another, which may increase security of the system by preventing, e.g., malicious intrusion into the system from spreading. Implementing one or more aspects of the system as a virtual computing environment may further advantageously enable parallel execution of various aspects or modules of the system, which may increase the scalability of the system. Implementing one or more aspects of the system as a virtual computing environment may further advantageously enable rapid provisioning (or de-provisioning) of computing resources to the system, which may increase scalability of the system by, e.g., expanding computing resources available to the system or duplicating operation of the system on multiple computing resources. For example, the system may be used by thousands, hundreds of thousands, or even millions of users simultaneously, and many megabytes, gigabytes, or terabytes (or more) of data may be transferred or processed by the system, and scalability of the system may enable such operation in an efficient and/or uninterrupted manner.

Various implementations of the present disclosure may be a system, a method, and/or a computer program product at any possible technical detail level of integration. The computer program product may include a computer-readable storage medium (or mediums) having computer-readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer-readable storage medium (or mediums). Computer-readable storage mediums may also be referred to herein as computer-readable storage or computer-readable storage devices.

The computer-readable storage medium can be a tangible device that can retain and store data and/or instructions for use by an instruction execution device. The computer-readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiberoptic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions (as also referred to herein as, for example, "code," "instructions," "module," "application," "software application," "service," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer-readable program instructions may be callable from other instructions or from itself, and/or may be invoked in response to detected events or interrupts. Computer-readable program instructions configured for execution on computing devices may be provided on a computer-readable storage medium, and/or as a digital download (and may be originally stored in a compressed or installable format that requires installation, decompression, or decryption prior to execution) that may then be stored on a computer-readable storage medium. Such computer-readable program instructions may be stored, partially or fully, on a memory device (e.g., a computer-readable storage medium) of the executing computing device, for execution by the computing device. The computer-readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some implementations, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart(s) and/or block diagram(s) block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowcharts and block diagrams in the Figures illustrate the architecture, functionality, and operation of possible implementations of systems, methods, and computer program products according to various implementations of the present disclosure. In this regard, each block in the flowchart or block diagrams may represent a service, module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted or optional in some implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, and/or the like with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above implementations may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows 11, Windows Server, and/or the like), Windows CE, Unix, Linux, SunOS, Solaris, Blackberry OS, VxWorks, or other suitable operating systems. In other implementations, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

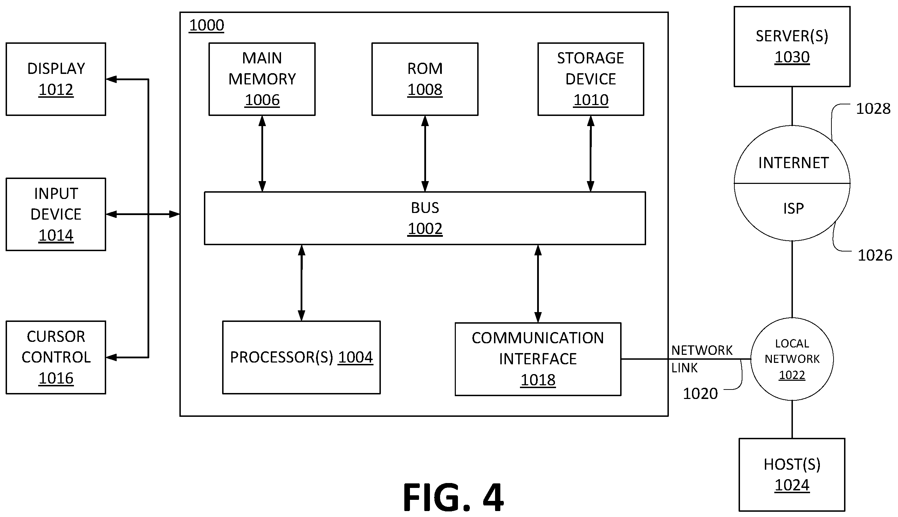

For example, Figure 4 shows a block diagram that illustrates a computer system 1000 upon which various implementations and/or aspects (e.g., one or more aspects of the AIS 102, one or more aspects of the data processing services 120, one or more aspects of the user device(s) 150, one or more aspects of the LLM 130, and/or the like) may be implemented. Multiple such computer systems 1000 may be used in various implementations of the present disclosure. Computer system 1000 includes a bus 1002 or other communication mechanism for communicating information, and a hardware processor, or multiple processors, 1004 coupled with bus 1002 for processing information. Hardware processor(s) 1004 may be, for example, one or more general purpose microprocessors.

Computer system 1000 also includes a main memory 1006, such as a random-access memory (RAM), cache and/or other dynamic storage devices, coupled to bus 1002 for storing information and instructions to be executed by processor 1004. Main memory 1006 also may be used for storing temporary variables or other intermediate information during execution of instructions to be executed by processor 1004. Such instructions, when stored in storage media accessible to processor 1004, render computer system 1000 into a special-purpose machine that is customized to perform the operations specified in the instructions. The main memory 1006 may, for example, include instructions to implement server instances, queuing modules, memory queues, storage queues, user interfaces, and/or other aspects of functionality of the present disclosure, according to various implementations.

Computer system 1000 further includes a read only memory (ROM) 1008 or other static storage device coupled to bus 1002 for storing static information and instructions for processor 1004. A storage device 1010, such as a magnetic disk, optical disk, or USB thumb drive (Flash drive), and/or the like, is provided and coupled to bus 1002 for storing information and instructions.

Computer system 1000 may be coupled via bus 1002 to a display 1012, such as a cathode ray tube (CRT) or LCD display (or touch screen), for displaying information to a computer user. An input device 1014, including alphanumeric and other keys, is coupled to bus 1002 for communicating information and command selections to processor 1004. Another type of user input device is cursor control 1016, such as a mouse, a trackball, or cursor direction keys for communicating direction information and command selections to processor 1004 and for controlling cursor movement on display 1012. This input device typically has two degrees of freedom in two axes, a first axis (e.g., x) and a second axis (e.g., y), that allows the device to specify positions in a plane. In some implementations, the same direction information and command selections as cursor control may be implemented via receiving touches on a touch screen without a cursor.

Computing system 1000 may include a user interface module to implement a GUI that may be stored in a mass storage device as computer executable program instructions that are executed by the computing device(s). Computer system 1000 may further, as described below, implement the techniques described herein using customized hard-wired logic, one or more ASICs or FPGAs, firmware and/or program logic which in combination with the computer system causes or programs computer system 1000 to be a special-purpose machine. According to one implementation, the techniques herein are performed by computer system 1000 in response to processor(s) 1004 executing one or more sequences of one or more computer-readable program instructions contained in main memory 1006. Such instructions may be read into main memory 1006 from another storage medium, such as storage device 1010. Execution of the sequences of instructions contained in main memory 1006 causes processor(s) 1004 to perform the process steps described herein. In alternative implementations, hard-wired circuitry may be used in place of or in combination with software instructions.

Various forms of computer-readable storage media may be involved in carrying one or more sequences of one or more computer-readable program instructions to processor 1004 for execution. For example, the instructions may initially be carried on a magnetic disk or solid-state drive of a remote computer. The remote computer can load the instructions into its dynamic memory and send the instructions over a telephone line using a modem. A modem local to computer system 1000 can receive the data on the telephone line and use an infra-red transmitter to convert the data to an infra-red signal. An infra-red detector can receive the data carried in the infra-red signal and appropriate circuitry can place the data on bus 1002. Bus 1002 carries the data to main memory 1006, from which processor 1004 retrieves and executes the instructions. The instructions received by main memory 1006 may optionally be stored on storage device 1010 either before or after execution by processor 1004.

Computer system 1000 also includes a communication interface 1018 coupled to bus 1002. Communication interface 1018 provides a two-way data communication coupling to a network link 1020 that is connected to a local network 1022. For example, communication interface 1018 may be an integrated services digital network (ISDN) card, cable modem, satellite modem, or a modem to provide a data communication connection to a corresponding type of telephone line. As another example, communication interface 1018 may be a local area network (LAN) card to provide a data communication connection to a compatible LAN (or WAN component to communicated with a WAN). Wireless links may also be implemented. In any such implementation, communication interface 1018 sends and receives electrical, electromagnetic, or optical signals that carry digital data streams representing various types of information.

Network link 1020 typically provides data communication through one or more networks to other data devices. For example, network link 1020 may provide a connection through local network 1022 to a host computer 1024 or to data equipment operated by an Internet Service Provider (ISP) 1026. ISP 1026 in turn provides data communication services through the worldwide packet data communication network now commonly referred to as the "Internet" 1028. Local network 1022 and Internet 1028 both use electrical, electromagnetic, or optical signals that carry digital data streams. The signals through the various networks and the signals on network link 1020 and through communication interface 1018, which carry the digital data to and from computer system 1000, are example forms of transmission media.

Computer system 1000 can send messages and receive data, including program code, through the network(s), network link 1020 and communication interface 1018. In the Internet example, a server 1030 might transmit a requested code for an application program through Internet 1028, ISP 1026, local network 1022 and communication interface 1018.

The received code may be executed by processor 1004 as it is received, and/or stored in storage device 1010, or other non-volatile storage for later execution.

As described above, in various implementations certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain implementations, one or more of the computing devices and/or systems of the disclosure may include mobile computing devices, and user interfaces may be accessible through such mobile computing devices (for example, smartphones and/or tablets).

Many variations and modifications may be made to the above-described implementations, the elements of which are to be understood as being among other acceptable examples. All such modifications and variations are intended to be included herein within the scope of this disclosure. The foregoing description details certain implementations. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being redefined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain implementations include, while other implementations do not include, certain features, elements, and/or steps. Thus, such conditional language is not generally intended to imply that features, elements and/or steps are in any way required for one or more implementations or that one or more implementations necessarily include logic for deciding, with or without user input or prompting, whether these features, elements and/or steps are included or are to be performed in any particular implementation.

The term "substantially" when used in conjunction with the term "real-time" forms a phrase that will be readily understood by a person of ordinary skill in the art. For example, it is readily understood that such language will include speeds in which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, and/or the like may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain implementations require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network interfaces, among others.

While the above detailed description has shown, described, and pointed out novel features as applied to various implementations, it may be understood that various omissions, substitutions, and changes in the form and details of the devices or processes illustrated may be made without departing from the spirit of the disclosure. As may be recognized, certain implementations of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

Example Aspects

Examples of implementations of the present disclosure can be described in view of the following example aspects. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example aspects below, or any features of the example aspects, can be combined with any one or more other example aspects, or features of the example aspects or other features of the present disclosure.

Aspect 1. A computer-implemented method performed by a computing system having one or more hardware computer processors in communication with one or more non-transitory computer readable storage devices storing software instructions executable by the hardware computer processors to manage interactions with a large language model (LLM), the method comprising: receiving a user prompt intended for processing by an LLM; determining, based at least on the user prompt, a set of examples to potentially be included in an enhanced user prompt, wherein each example includes an input-output pair of text; generating, for each example in the set of examples, an embedding representative of the example, wherein each embedding is an n-dimensional vector representation of the example in a vector space; identifying a plurality of clusters of the examples based at least on corresponding embeddings of the examples, wherein each cluster comprises embeddings that are similar to each other in the vector space; determining, for each cluster: an average embedding of all embeddings associated with the cluster; a representative example having an embedding closest to the average embedding of the cluster; and generating the enhanced user prompt including at least some of the user prompt and each of the representative examples.

Aspect 2. The computer-implemented method of Aspect 1, wherein a quantity of clusters is provided by user input.

Aspect 3. The computer-implemented method of Aspect 1, wherein determining the set of examples comprises selecting examples from a predefined library of examples based on semantic similarity to the user prompt.

Aspect 4. The computer-implemented method of Aspect 1, further comprising: ranking the representative examples based on their relevance to user input and generating the enhanced user prompt by including top-ranked examples.

Aspect 5. A computer-implemented method performed by a computing system having one or more hardware computer processors in communication with one or more non-transitory computer readable storage devices storing software instructions executable by the hardware computer processors to manage interactions with a larger language model (LLM), the method comprising: generating one or more clusters of embeddings based at least in part on user input and a set of available examples, wherein each cluster of embeddings comprises one or more embeddings, and wherein each embedding corresponds to an example in the set of available examples; determining, for each cluster, a representative example for the cluster by comparing, on an embedding-by-embedding basis, each embedding in the cluster to a centroid of the cluster; and converting the user input and each of the representative examples into an enhanced user prompt that increases usefulness of an LLM response.

Aspect 6. The computer-implemented method of Aspect 5, the method further comprising generating an embedding for each example in the set of available examples.

Aspect 7. The computer-implemented method of Aspect 5, wherein each embedding in a single cluster is similar to every other embedding in the cluster, and wherein each embedding in the cluster is dissimilar to every embedding in every other cluster.

Aspect 8. The computer-implemented method of Aspect 5, wherein each embedding in a single cluster corresponds to an example that is related to every other example represented in the cluster, and wherein each example represented in every cluster is related to the user input.

Aspect 9. The computer-implemented method of Aspect 5, the method further comprising determining the centroid of a cluster by averaging, on an element-by-element basis, over all elements of all embeddings in the cluster.

Aspect 10. The computer-implemented method of Aspect 5, wherein determining the representative example for a cluster comprises determining a distance between each embedding in the cluster and the centroid of the cluster or determining an angle between each embedding in the cluster and the centroid of the cluster.

Aspect 11. The computer-implemented method of Aspect 5, wherein the representative example of each cluster corresponds to an ideal example in the set of available examples, wherein the ideal example increases the usefulness of the LLM response.

Aspect 12. The computer-implemented method of Aspect 5, wherein a quantity of generated clusters corresponds to a quantity of examples indicated in the user input.

Aspect 13. The computer-implemented method of claim 5, wherein converting the user input and each of the representative examples into the enhanced user prompt comprises generating a subset of embeddings to add to an initial user prompt, each embedding in the subset of embeddings corresponding to one of the determined representative examples.

Aspect 14. The computer-implemented method of Aspect 5, the method further comprising providing the enhanced user prompt to the LLM.

Aspect 15. A computing system having one or more hardware computer processors in communication with one or more non-transitory computer readable storage devices storing software instructions executable by the hardware computer processors to manage interactions with a larger language model (LLM), the system configured to: generate one or more clusters of embeddings based at least in part on user input and a set of available examples, wherein each cluster of embeddings comprises one or more embeddings, and wherein each embedding corresponds to an example in the set of available examples; determine, for each cluster, a representative example for the cluster by comparing, on an embedding-by-embedding basis, each embedding in the cluster to a centroid of the cluster; and convert the user input and each of the representative examples into an enhanced user prompt that increases usefulness of an LLM response.

Aspect 16. The system of Aspect 15, wherein the system is further configured to generate an embedding for each example in the set of available examples.

Aspect 17. The system of Aspect 15, wherein each embedding in a single is similar to every other embedding in the cluster, and wherein each embedding in the cluster is dissimilar to every embedding in every other cluster.

Aspect 18. The system of Aspect 15, wherein each embedding in a single cluster corresponds to an example that is related to every other example represented in the cluster, and wherein each example represented in every cluster is related to the user input.

Aspect 19. The system of Aspect 15, wherein the system is further configured to determine the centroid of a cluster by averaging, on an element-by-element basis, over all elements of all embeddings in the cluster.

Aspect 20. The system of Aspect 15, wherein the system is further configured to determine the representative example for a cluster based on a determination of a distance between each embedding in the cluster and the centroid of the cluster or a determination of an angle between each embedding in the cluster and the centroid of the cluster.

Aspect 21. The system of Aspect 15, wherein the representative example of each cluster corresponds to an ideal example in the set of available examples, wherein the ideal example increases the usefulness of the LLM response.

Aspect 22. The system of Aspect 15, wherein a quantity of generated clusters corresponds to a quantity of examples indicated in the user input.

Aspect 23. The system of Aspect 15, wherein the system is further configured generate a subset of embeddings to add to an initial user prompt, each embedding in the subset of embeddings corresponding to one of the determined representative examples.

Aspect 24. The system of Aspect 15, wherein the system is further configured to provide the enhanced user prompt to the LLM.

Aspect 25. A computer-implemented method performed by a computing system having one or more hardware computer processors in communication with one or more non-transitory computer readable storage devices storing software instructions executable by the hardware computer processors to manage interactions with a larger language model (LLM), the method comprising: generating one or more clusters of embeddings based at least in part on user input and a set of available examples, wherein each embedding in a single cluster corresponds to an example in the set of available examples, wherein each embedding in a single cluster is related to each other, and wherein each embedding in each cluster is related to the user input; determining a subset of ideal examples based on the one or more clusters of embeddings, wherein each ideal example is in the set of available examples, wherein each ideal example is related to the user input, wherein each ideal example is diverse from every other ideal example, and wherein the subset of ideal examples helps guide an LLM to generate a useful response; and generating an enhanced user prompt based on the user input and the subset of ideal examples.

Aspect 26. The computer-implemented method of Aspect 25, wherein the set of available examples is manually curated by a user or determined based on user feedback of previously identified correct or incorrect LLM responses.

Aspect 27. The computer-implemented method of Aspect 25, the method further comprising generating a set of embeddings that corresponds to the set of available examples, wherein each embedding in the set of embeddings corresponds to a respective example in the set of available examples.

Aspect 28. The computer-implemented method of Aspect 25, wherein each ideal example for each cluster is represented by an embedding that is closest to a centroid of the respective cluster.

Aspect 29. The computer-implemented method of Aspect 25, wherein a quantity of generated clusters corresponds to a quantity of examples indicated in the user input.

Aspect 30. The computer-implemented method of Aspect 25, wherein each embedding in a single cluster corresponds to an example that is related to every other example represented in the single cluster, and wherein each example represented in every cluster is related to the user input.

Aspect 31. The computer-implemented method of Aspect 25, wherein determining the ideal example for each cluster comprises determining an average embedding for the cluster by averaging, on an element-by-element basis, over each element of each embedding in the cluster, wherein the average embedding corresponds to a centroid of the cluster in vector space.

Aspect 32. The computer-implemented method of Aspect 31, wherein determining the ideal example of each cluster comprises comparing, on an embedding-by-embedding basis, each embedding in the cluster to the average embedding of the cluster.

Aspect 33. The computer-implemented method of Aspect 25, wherein generating the enhanced user prompt comprises augmenting the user input with the subset of ideal examples.

Aspect 34. The computer-implemented method of Aspect 25, wherein generating the enhanced user prompt comprises augmenting an initial user prompt with a subset of ideal embeddings, wherein each ideal embedding corresponds to one of the determined ideal examples.

Aspect 35. A computing system having one or more hardware computer processors in communication with one or more non-transitory computer readable storage devices storing software instructions executable by the hardware computer processors to manage interactions with a larger language model (LLM), the system configured to: generate one or more clusters of embeddings based at least in part on user input and a set of available examples, wherein each embedding in a single cluster corresponds to an example in the set of available examples, wherein each embedding in a single cluster is related to each other, and wherein each embedding in each cluster is related to the user input; determine a subset of ideal examples based on the one or more clusters of embeddings, wherein each ideal example is in the set of available examples, wherein each ideal example is related to the user input, wherein each ideal example is diverse from every other ideal example, and wherein the subset of ideal examples helps guide an LLM to generate a useful response; generate an enhanced user prompt based on the user input and the subset of ideal examples.

Aspect 36. The system of Aspect 35, wherein the set of available examples is manually curated by a user or determined based on user feedback of previously identified correct or incorrect LLM responses.

Aspect 37. The system of Aspect 35, the system further configured to generate a set of embeddings that corresponds to the set of available examples, wherein each embedding in the set of embeddings corresponds to a respective example in the set of available examples.

Aspect 38. The system of Aspect 35, wherein each ideal example for each cluster is represented by an embedding that is closest to a centroid of the respective cluster.

Aspect 39. The system of Aspect 35, wherein a quantity of generated clusters corresponds to a quantity of examples indicated in the user input.

Aspect 40. The system of Aspect 35, wherein each embedding in a single cluster corresponds to an example that is related to every other example represented in the single cluster, and wherein each example represented in every cluster is related to the user input.

Aspect 41. The system of Aspect 35, wherein the system is further configured to determine, for each cluster, an average embedding for the cluster by averaging, on an element-by-element basis, over each element of each embedding in the cluster, wherein the average embedding corresponds to a centroid of the cluster in vector space.

Aspect 42. The system of Aspect 41, wherein the system is further configured to compare, for each cluster, on an embedding-by-embedding basis, each embedding in the cluster to the average embedding of the cluster.

Aspect 43. The system of Aspect 35, the system further configured to augment the user input with the subset of ideal examples.

Aspect 44. The system of Aspect 35, the system further configured to augment an initial user prompt with a subset of ideal embeddings, wherein each ideal embedding corresponds to one of the determined ideal examples.

## Claims

1. A computer-implemented method performed by a computing system having one or more hardware computer processors in communication with one or more non-transitory computer readable storage devices storing software instructions executable by the hardware computer processors to manage interactions with a large language model (LLM), the method comprising:

   receiving a user prompt intended for processing by an LLM;
   determining, based at least on the user prompt, a set of examples to potentially be included in an enhanced user prompt, wherein each example includes an input-output pair of text;
   generating, for each example in the set of examples, an embedding representative of the example, wherein each embedding is an n-dimensional vector representation of the example in a vector space;
   identifying a plurality of clusters of the examples based at least on corresponding embeddings of the examples, wherein each cluster comprises embeddings that are similar to each other in the vector space;
   determining, for each cluster:

      an average embedding of all embeddings associated with the cluster;
      a representative example having an embedding closest to the average embedding of the cluster; and

   generating the enhanced user prompt including at least some of the user prompt and each of the representative examples.

2. The computer-implemented method of claim 1, wherein a quantity of clusters is provided by user input.

3. The computer-implemented method of claim 1 or claim 2, wherein determining the set of examples comprises selecting examples from a predefined library of examples based on semantic similarity to the user prompt.

4. The computer-implemented method of any preceding claim, further comprising:
   ranking the representative examples based on their relevance to user input and generating the enhanced user prompt by including top-ranked examples.

5. A computer-implemented method performed by a computing system having one or more hardware computer processors in communication with one or more non-transitory computer readable storage devices storing software instructions executable by the hardware computer processors to manage interactions with a larger language model (LLM), the method comprising:

   generating one or more clusters of embeddings based at least in part on user input and a set of available examples, wherein each cluster of embeddings comprises one or more embeddings, and wherein each embedding corresponds to an example in the set of available examples;
   determining, for each cluster, a representative example for the cluster by comparing, on an embedding-by-embedding basis, each embedding in the cluster to a centroid of the cluster; and
   converting the user input and each of the representative examples into an enhanced user prompt that increases usefulness of an LLM response.

6. The computer-implemented method of claim 5, the method further comprising generating an embedding for each example in the set of available examples.

7. The computer-implemented method of claim 5 or claim 6, wherein each embedding in a single cluster is similar to every other embedding in the cluster, and wherein each embedding in the cluster is dissimilar to every embedding in every other cluster.

8. The computer-implemented method of any of claims 5 to 7, wherein each embedding in a single cluster corresponds to an example that is related to every other example represented in the cluster, and wherein each example represented in every cluster is related to the user input.

9. The computer-implemented method of any of claims 5 to 8, the method further comprising determining the centroid of a cluster by averaging, on an element-by-element basis, over all elements of all embeddings in the cluster.

10. The computer-implemented method of any of claims 5 to 9, wherein determining the representative example for a cluster comprises determining a distance between each embedding in the cluster and the centroid of the cluster or determining an angle between each embedding in the cluster and the centroid of the cluster.

11. The computer-implemented method of any of claims 5 to 10, wherein the representative example of each cluster corresponds to an ideal example in the set of available examples, wherein the ideal example increases the usefulness of the LLM response.

12. The computer-implemented method of any of claims 5 to 11, wherein a quantity of generated clusters corresponds to a quantity of examples indicated in the user input.

13. The computer-implemented method of any of claims 5 to 12, wherein converting the user input and each of the representative examples into the enhanced user prompt comprises generating a subset of embeddings to add to an initial user prompt, each embedding in the subset of embeddings corresponding to one of the determined representative examples.

14. The computer-implemented method of any of claims 5 to 13, the method further comprising providing the enhanced user prompt to the LLM.

15. A computing system having one or more hardware computer processors in communication with one or more non-transitory computer readable storage devices storing software instructions executable by the hardware computer processors to manage interactions with a larger language model (LLM), the system configured to perform the computer-implemented method of any preceding claim.

**FIG. 1A**

Large Language Model (LLM) 130

AI System 102

User Interface Module 104

Prompt Generation Module 108

Context Module 110

Data Processing Services 120

Network 140

User 150

100B

Receive user input — 111

Generate LLM prompt based on user input — 113

Receive LLM output based on providing prompt to LLM — 115

Implement one or more tool operations based on LLM output — 117

Access data based on implementing the one or more tool operations — 119

Generate subsequent LLM prompt based on accessed data — 121

Provide subsequent LLM prompt to LLM — 123

Receive subsequent LLM output based on providing subsequent prompt to LLM — 125

Provide response to user — 127

# FIG. 1B

FIG. 2

300 ⌐

302 ⌐

Receive a user prompt intended for processing by an LLM

304 ⌐

Determine, based at least on the user prompt, a set of examples to potentially include in an enhanced user prompt

306 ⌐

Generate an embedding for each example in the set of examples

308 ⌐

Identify a plurality of clusters of examples based at least on the generated embeddings

310 ⌐

Determine an average embedding for each cluster

312 ⌐

Determine a representative example for each cluster based on the average embeddings

314 ⌐

Generate the enhanced user prompt including at least some of the user prompt and each of the representative examples

# FIG. 3

**FIG. 4**

Europäisches
Patentamt

European
Patent Office

Office européen
des brevets

**EUROPEAN SEARCH REPORT**

**Application Number**

EP 25 17 8293

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN DING ET AL: "A Prompt Example Construction Method Based on Clustering and Semantic Similarity", SYSTEMS (BASEL), vol. 12, no. 10, 3 October 2024 (2024-10-03), page 410, XP093332284, Basel ISSN: 2079-8954, DOI: 10.3390/systems12100410 * the whole document * | 1-15 | INV. G06F40/216 G06F40/30 G06F40/35 G06F40/44 G06F40/56 |
| A | ZHOU HAN ET AL: "Survival of the Most Influential Prompts: Efficient Black-Box Prompt Search via Clustering and Pruning", FINDINGS OF THE ASSOCIATION FOR COMPUTATIONAL LINGUISTICS: EMNLP 2023, 19 October 2023 (2023-10-19), pages 13064-13077, XP093332288, DOI: 10.18653/v1/2023.findings-emnlp.870 * the whole document * | 1-15 | |
| | ----- | | **TECHNICAL FIELDS SEARCHED (IPC)** |
| A | ARTHUR DAVID ET AL: "k-means++: The Advantages of Careful Seeding", , [Online] 18 December 2008 (2008-12-18), XP093332488, Retrieved from the Internet: URL:http://ilpubs.stanford.edu:8090/778/1/2006-13.pdf> [retrieved on 2025-10-28] * page 1 - page 3 * | 1,5,9,10 | G06F |

-/--

The present search report has been drawn up for all claims

| Place of search | Date of completion of the search | Examiner |
|---|---|---|
| Berlin | 7 November 2025 | Stauch, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                     
& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 17 8293

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Hung Ming-Chuan ET AL: "An Efficient k-Means Clustering Algorithm Using Simple Partitioning *", , 30 September 2005 (2005-09-30), XP093332373, Retrieved from the Internet: URL:https://www.researchgate.net/profile/J ungpin-Wu/publication/298984103_An_Efficie nt_k-Means_Clustering_Algorithm_Using_Simp le_Partitioning/links/5514a1460cf260a7cb2c ed41/An-Efficient-k-Means-Clustering-Algor ithm-Using-Simple-Partitioning.pdf [retrieved on 2025-11-05] * page 1 - page 5 * ----- | 1,2,5,7, 8,15 | |

**TECHNICAL FIELDS SEARCHED (IPC)**

The present search report has been drawn up for all claims

| Place of search | Date of completion of the search | Examiner |
|---|---|---|
| Berlin | 7 November 2025 | Stauch, Marc |

EPO FORM 1503 03.82 (P04C01)